(19) Europäisches Patentamt
European Patent Office
Office européen des brevets

(11) EP 4 407 713 A1

(12) # EUROPEAN PATENT APPLICATION
published in accordance with Art. 153(4) EPC

(43) Date of publication:
**31.07.2024 Bulletin 2024/31**

(21) Application number: **22872729.3**

(22) Date of filing: **08.09.2022**

(51) International Patent Classification (IPC):
***H01M 4/525*** *(2010.01)* ***C01G 53/00*** *(2006.01)*
***H01M 4/505*** *(2010.01)*

(52) Cooperative Patent Classification (CPC):
**C01G 53/00; H01M 4/505; H01M 4/525;**
Y02E 60/10

(86) International application number:
**PCT/JP2022/033802**

(87) International publication number:
**WO 2023/047974 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 JP 2021154554**
**16.11.2021 JP 2021186684**

(71) Applicant: **Proterial, Ltd.**
**Tokyo 135-0061 (JP)**

(72) Inventors:
- **NAKABAYASH,I Takashi**
**Tokyo 135-0061 (JP)**
- **TAKANO, Shuichi**
**Tokyo 135-0061 (JP)**
- **TOKORO, Hisato**
**Tokyo 135-0061 (JP)**

(74) Representative: **Becker, Eberhard**
**Becker Kurig & Partner**
**Patentanwälte mbB**
**Bavariastraße 7**
**80336 München (DE)**

(54) # POSITIVE ELECTRODE ACTIVE MATERIAL FOR LITHIUM ION SECONDARY BATTERY, AND LITHIUM ION SECONDARY BATTERY

(57) Provided is a positive electrode active material for a lithium ion secondary battery which combines high capacity with favorable charging/discharging cycle characteristics. In this positive electrode active material for a lithium ion secondary battery, the average value of the particle diameters of the primary particles evaluated with a scanning electron microscope is 50-550 nm, and the R value is greater than 0.420 but less than or equal to 0.460, the R value being calculated by formula (2) as follows: (2) R value=$(I_{006}+I_{102})/I_{101}$ on the basis of the intensity $I_{006}$ calculated from the height of a peak identified as the 006-plane of an $\alpha$-$NaFeO_2$ type layered structure in X-ray powder diffraction measurement, the intensity $I_{102}$ calculated from the height of a peak identified as the 102-plane, and the intensity $I_{101}$ calculated from the height of a peak identified as the 101-plane.

215
210
205
200
195
190
185
180
175
Initial capacity (Ah/kg)
0.42
0.44
0.46
0.48
R value

FIG. 4

## Description

Technical Field

The present invention relates to a positive electrode active material for a lithium ion secondary battery, and a lithium ion secondary battery.

Related Art

Lithium ion secondary batteries are widely used as lightweight secondary batteries with high energy density. Lithium ion secondary batteries are required to have even higher capacity as the applications expand. Besides, favorable charging/discharging cycle characteristics are also required.

Under these circumstances, studies are being conducted on reducing the lithium ion insertion/desorption resistance and diffusion resistance, stabilizing the crystal structure, etc. in addition to establishing high capacity and mass productivity for the positive electrode active material that greatly influences battery characteristics. A lithium metal composite oxide having an $\alpha$-$NaFeO_2$ type crystal structure (hereinafter may be referred to as a layered structure) is widely known as a positive electrode active material for lithium ion secondary batteries. Conventionally, $LiCoO_2$ has been used as an oxide having a layered structure, but in response to demands for high capacity and mass productivity, a ternary oxide represented by Li(Ni, Co, Mn)Oz and a nickel-based oxide in which $LiNiO_2$ is replaced with a different element have been developed.

Among lithium metal composite oxides having a layered structure, the nickel-based oxide has a disadvantage that the charging/discharging cycle characteristics are not necessarily favorable. However, the nickel-based oxide is composed of nickel which is cheaper than cobalt, etc. and exhibits relatively high capacity, so the nickel-based oxide is expected to be applied to various uses. In particular, there are rising expectations for chemical compositions with a high proportion of nickel per metal (Ni, Co, Mn, etc.) excluding lithium.

Patent Document 1 discloses a method that is characterized in mixing at least a predetermined amount of a nickel salt and a lithium salt to form a raw material mixture, and granulating the raw material mixture and firing the resulting granules when firing the raw material mixture to synthesize $LiNiO_2$. The method produces a $LiNiO_2$-based layered composite oxide with high productivity including a working surface from a composite having a desired crystal structure.

Patent Document 2 discloses a non-aqueous electrolyte secondary battery having a negative electrode composed of lithium metal or a material capable of absorbing and releasing lithium, and a positive electrode. The non-aqueous electrolyte secondary battery is characterized in that the positive electrode is represented by $Li_XNi_{1-Y-Z}Co_YA_ZO_2$ ($0<x<1.2$, $0<y\leqq 0.2$, $0.02\leqq z\leqq 0.09$, and A is at least one selected from Mn, Al, B, Ti, Mg, and Fe) as an active material, and contains a lithium-metal composite oxide in which the peak intensity ratio of the 006-plane, 102-plane, and 101-plane {=(I006+I102)/I101} in X-ray powder diffraction measurement is 0.37 or more and 0.42 or less, and the cumulative frequency of particles with a particle diameter of 1 μm or less is 2% or less when the total volume of the active material is 100%.

Patent Document 3 discloses a positive electrode active material for a lithium secondary battery containing at least nickel, cobalt, and manganese and having a layered structure. The positive electrode active material for a lithium secondary battery satisfies the following requirements (1) to (3).

(1) The primary particle diameter is 0.1 μm or more and 1 μm or less, and the 50% cumulative volume particle size D50 is 1 μm or more and 10 μm or less

(2) The ratio D90/D10 of 90% cumulative volume particle size D90 to 10% cumulative volume particle size D10 is 2 or more and 6 or less

(3) The amount of lithium carbonate contained in the residual alkali on the particle surface measured by neutralization titration is 0.1% by mass or more and 0.8% by mass or less Citation List

Patent Documents

[Patent Document 1] Japanese Patent Application Laid-Open No. 2000-72446

[Patent Document 2] Japanese Patent Application Laid-Open No. 2002-124257

[Patent Document 3] International Publication No. 2015/182665

## SUMMARY OF INVENTION

### Technical Problem

In Patent Document 1, the electrode characteristics are unknown. Further, as a nickel-based positive electrode active material that exhibits high capacity and is expected to be applied to various uses, Patent Documents 2 and 3 were not sufficient in terms of the capacity and capacity retention rate. In other words, there is a problem that it is difficult to achieve both high capacity and favorable charging/discharging cycle characteristics (high capacity retention rate).

An object of the present invention is to provide a positive electrode active material for a lithium ion secondary battery, and a lithium ion secondary battery that have both high capacity and favorable charging/discharging cycle characteristics.

### Solution to Problem

A positive electrode active material for a lithium ion secondary battery according to the present invention includes primary particles of a lithium composite oxide represented by following formula (1) and secondary particles in which the primary particles aggregate,

$$Li_{1+a}Ni_bCo_cM_dX_eO_{2+\alpha} \cdots \quad (1)$$

[where, in compositional formula (1), M is at least one element selected from Al and Mn, X is at least one element selected from the group consisting of Ti, Ga, Mg, Zr, and Zn, and numbers satisfying $-0.10 \leqq a \leqq 0.10$, $0.80 \leqq b < 1.00$, $0 \leqq c \leqq 0.20$, $0 \leqq d \leqq 0.20$, $0 \leqq e \leqq 0.05$, $b+c+d+e=1.00$, and $-0.20 \leqq \alpha \leqq 0.20$]

in which an average value of particle diameters of the primary particles evaluated with a scanning electron microscope is 50 nm or more and 550 nm or less, and an R value calculated by following formula (2) is greater than 0.420 and less than or equal to 0.460,

$$R\ value = (I_{006} + I_{102}) / I_{101} \cdots (2)$$

based on an intensity $I_{006}$ calculated from a height of a peak identified as a 006-plane of an $\alpha$-$NaFeO_2$ type layered structure in X-ray powder diffraction measurement, an intensity $I_{102}$ calculated from a height of a peak identified as a 102-plane, and an intensity $I_{101}$ calculated from a height of a peak identified as a 101-plane.

Further, in the positive electrode active material for a lithium ion secondary battery according to the present invention, it is preferable that a sum of a half-value width of a peak identified as a 104-plane and the R value in X-ray powder diffraction measurement is 0.480 or more and 0.595 or less.

Further, in the positive electrode active material for a lithium ion secondary battery according to the present invention, it is preferable that a specific surface area is 0.30 $m^2/g$ or more and 1.00 $m^2/g$ or less.

Further, in the positive electrode active material for a lithium ion secondary battery according to the present invention, it is preferable that an oil absorption amount of N-methyl-2-pyrrolidone per 100 g of lithium composite oxide powder based on JIS K5101-13-1 is 27 ml/100g or more and 35 ml/100g or less.

Further, in the positive electrode active material for a lithium ion secondary battery according to the present invention, it is preferable that a porosity is 8% or more and 24% or less.

Further, in the positive electrode active material for a lithium ion secondary battery according to the present invention, it is preferable that a most frequent pore diameter is 0.22 $\mu$m or more and 0.30 $\mu$m or less.

Further, in the positive electrode active material for a lithium ion secondary battery according to the present invention, it is preferable that a in the formula (1) satisfies $0.02 \leqq a \leqq 0.10$.

Further, the present invention is a lithium ion secondary battery including a positive electrode containing the above-described positive electrode active material for a lithium ion secondary battery.

### Effects of Invention

The present invention is capable of providing a positive electrode active material for a lithium ion secondary battery, and a lithium ion secondary battery that have both high capacity and favorable charging/discharging cycle characteristics.

BRIEF DESCRIPTION OF DRAWINGS

FIG. 1 is a partial cross-sectional view schematically showing an example of the lithium ion secondary battery.
FIG. 2 is a view schematically showing an example of the secondary particles and the primary particles of the positive electrode active material.
FIG. 3 is a SEM photograph showing an example of the positive electrode active material of an example.
FIG. 4 is a diagram showing the relationship between the initial capacity and the R value.
FIG. 5 is a diagram showing the relationship between the initial capacity rate and the R value.
FIG. 6 is a diagram showing the relationship between the initial capacity and the sum of the half-value width of the peak identified on the 104-plane and the R value.
FIG. 7 is a diagram showing the relationship between the initial capacity rate and the sum of the half-value width of the peak identified on the 104-plane and the R value.
FIG. 8 is a diagram showing the relationship between the capacity retention rate and the average value of the primary particle diameter.
FIG. 9 is a diagram showing the relationship between the capacity retention rate and the specific surface area.
FIG. 10 is a diagram showing the relationship between the capacity retention rate and the oil absorption amount.
FIG. 11 is a diagram showing the relationship between the capacity retention rate and the porosity.
FIG. 12 is a diagram showing the relationship between the capacity retention rate and the most frequent pore diameter.

DESCRIPTION OF EMBODIMENTS

Hereinafter, embodiments of a positive electrode active material for a lithium ion secondary battery, and a lithium ion secondary battery using the same according to the present invention will be described in detail.

<Positive electrode active material>

The positive electrode active material for a lithium ion secondary battery according to this embodiment is a lithium composite oxide having an $\alpha$-$NaFeO_2$ type layered structure. Having the layered structure allows the included Li element to be inserted and desorbed as ions, and further including the Ni element can realize high discharge capacity.

(Chemical composition)

In addition to the lithium composite oxide that is the main component, the positive electrode active material according to this embodiment may include unavoidable impurities derived from the raw materials and manufacturing processes, other components covering the particles of the lithium composite oxide, such as a boron component, a phosphorus component, a sulfur component, a fluorine component, and an organic substance, and other components mixed together with the particles of the lithium composite oxide.

The positive electrode active material for a lithium ion secondary battery of the present invention is a lithium composite oxide represented by the following formula (1).

$$Li_{1+a}Ni_bCo_cM_dX_eO_{2+\alpha} \quad ... \quad (1)$$

[where, in compositional formula (1), M is at least one element selected from Al and Mn, X is at least one element selected from the group consisting of Ti, Ga, Mg, Zr, and Zn, and numbers satisfying $-0.10 \leqq a \leqq 0.10$, $0.80 \leqq b < 1.00$, $0 \leqq c \leqq 0.20$, $0 \leqq d \leqq 0.20$, $0 \leqq e \leqq 0.05$, $b+c+d+e=1$, and $-0.20 \leqq \alpha \leqq 0.20$.]

a in compositional formula (1) is -0.10 or more and 0.10 or less. Further, a is preferably -0.04 or more and 0.08 or less. a represents the excess or deficiency of lithium with respect to the stoichiometric ratio of $Li(Ni, Co, M, X)O_2$. a is neither the value charged at the time of raw material synthesis nor the value in a state where the Li compound has been removed from the surface of the positive electrode active material by washing with water or the like. Here, a indicates the value in the lithium composite oxide obtained by firing.

When a in compositional formula (1) is 0.02 or more and 0.10 or less, the synthesis reaction proceeds appropriately during firing, the amount of cation mixing in which nickel is mixed into the lithium sites decreases, and the R value decreases. Furthermore, when a in compositional formula (1) is 0.04 or more and 0.10 or less, the amount of cation mixing further decreases and the R value further decreases, which is preferable. Therefore, a layered structure with fewer defects can be formed to obtain high discharge capacity. Regarding the positive electrode active material that takes the lithium composite oxide represented by compositional formula (1) as the main component, the ratio of the atomic concentration (number of moles) of lithium contained in the positive electrode active material to the total atomic concentration (number of moles) of metal elements other than lithium is preferably 0.96 or more and 1.10 or less, 1.02 or more and 1.08 or less, and more preferably 1.04 or more and 1.08 or less. Other components may be mixed into the fired precursor fired by heat treatment, and there is a possibility that the reaction ratio during firing may deviate from the stoichiometric ratio. However, with such an atomic concentration ratio, cation mixing and a decrease in crystallinity are likely to be suppressed during firing based on the chemical composition represented by compositional formula (1). Therefore, a positive electrode active material with high initial capacity is obtained.

The above has described the preferred range of a in a state of powder manufactured as a positive electrode active material, but when the positive electrode active material represented by compositional formula (1) is incorporated into the positive electrode of a lithium ion secondary battery, charging and discharging are performed accompanied by insertion and desorption of Li, so a is preferably in the range of -0.90 to 0.10.

The coefficient b of Ni (nickel) in compositional formula (1) is 0.80 or more and less than 1.00. When b is 0.80 or more, high discharge capacity can be achieved compared to other nickel-based oxides with a low nickel content and ternary oxides represented by $Li(Ni, Co, Mn, M1)O_2$. Additionally, since the amount of metals rarer than nickel is reduced, the raw material costs can be reduced.

The coefficient b of nickel may be 0.85 or more, 0.90 or more, or 0.92 or more. The discharge capacity tends to be higher as b increases. Further, the coefficient b of nickel may be 0.95 or less, 0.90 or less, or 0.85 or less. As b decreases, the lattice distortion or crystal structure change due to insertion and desorption of lithium ions is reduced, and cation mixing in which nickel is mixed into lithium sites and a decrease in crystallinity are less likely to occur during firing, so favorable charging/discharging cycle characteristics tend to be obtained.

The coefficient c of Co (cobalt) in compositional formula (1) is 0 or more and 0.20 or less. Cobalt may be actively added or may be added at a composition ratio corresponding to unavoidable impurities. Addition of cobalt makes the crystal structure more stable, suppresses cation mixing in which nickel is mixed into lithium sites, and reduces the R value. On the other hand, even if cobalt is not added (cobalt-free), the amount of cation mixing can be suppressed by controlling firing conditions. Therefore, by setting the coefficient c of cobalt within the above range, high discharge capacity and favorable charging/discharging cycle characteristics can be obtained. On the other hand, when cobalt is excessive, the raw material costs of the positive electrode active material increase. Furthermore, the proportion of other metals such as nickel may become low, leading to a possibility that the discharge capacity may become low or the effect of the metal element represented by X may decrease. In contrast, if c is within the above numerical range, the raw material costs of the lithium composite oxide that exhibits high discharge capacity and favorable charging/discharging cycle characteristics can be reduced.

The coefficient c of cobalt may be 0.06 or less, 0.03 or less, 0.01 or less, or 0. The raw material costs can be reduced as c decreases. While the crystal structure easily becomes more stable, which has the effect of suppressing cation mixing in which nickel is mixed into lithium sites, as the amount of cobalt added increases, high initial capacity and favorable charging/discharging cycle characteristics can be obtained by setting the R value and the primary particle diameter to desired values through firing conditions, thereby reducing the amount of cobalt and making the material cobalt-free.

The coefficient d of the element M in compositional formula (1) is 0 or more and 0.20 or less. When nickel is substituted with at least one type of M selected from the group consisting of manganese and aluminum, the layered structure remains more stable even if lithium is desorbed by charging. On the other hand, when M is excessive, the proportion of other metals such as nickel becomes low, and the charge/discharge capacity of the positive electrode active material decreases. If d is within the above numerical range, the crystal structure of the positive electrode active material remains stable, and high charge/discharge capacity, favorable charging/discharging cycle characteristics, thermal stability, etc. can be obtained.

Manganese is particularly preferred as the element represented by M. When nickel is substituted with manganese, higher charge/discharge capacity is obtained compared to when nickel is substituted with aluminum. Furthermore, during firing of the lithium composite compound, manganese also reacts with lithium carbonate as shown in the following formula (3). Such a reaction suppresses the coarsening of crystal grains and allows the oxidation reaction of nickel to proceed at a high temperature, so as to efficiently obtain a positive electrode active material exhibiting high charge/discharge capacity.

$$2Li_2CO_3+4M'O+O_2\rightarrow 4LiM'O_2+2CO_2 \ldots \qquad (3)$$

(where, in the above formula (3), M' represents a metal element such as Ni, Co, and Mn.)

The element represented by M preferably contains both manganese and aluminum. Aluminum promotes the formation of the $\alpha$-$NaFeO_2$ type crystal structure that exhibits a layered structure. Further, as described above, manganese suppresses the coarsening of crystal grains. Therefore, by including both manganese and aluminum, a positive electrode active material with high crystallinity can be obtained while suppressing the coarsening of crystal grains.

The coefficient d of M is preferably 0.02 or more, more preferably 0.04 or more. The effect of manganese and/or aluminum substitution is sufficiently obtained as d increases. That is, it becomes possible to proceed with the oxidation reaction of nickel at a higher temperature, a positive electrode active material exhibiting high charge/discharge capacity can be obtained more efficiently, and a positive electrode active material having both appropriate R value and primary particle diameter can be obtained. Moreover, d is preferably 0.18 or less. If d is 0.18 or less, the charge/discharge capacity remains high even with substitution.

X in compositional formula (1) is at least one element selected from the group consisting of Ti, Ga, Mg, Zr, and Zn. These elements promote or suppress the formation of the $\alpha$-$NaFeO_2$ type crystal structure exhibiting a layered structure and the grain growth of primary particles. This effect makes it possible to reduce the R value while suppressing the primary particle diameter.

The element X preferably contains Ti. Ti is capable of suppressing the grain growth. Further, after Li and Ni react to start forming the $\alpha$-$NaFeO_2$ type crystal structure exhibiting a layered structure, Ti reacts with Li to form a concentrated layer. In this case, Ti is present on the surface of the primary particles of the positive electrode active material during the relatively low-temperature firing step where the reaction between Li and Ni starts, and Ti tends to form a concentrated layer on the surface of the primary particles in the subsequent high-temperature firing step. Since Ti can be tetravalent, Ti has a strong bond with O and has the effect of suppressing crystal structure deterioration from the surface of the positive electrode active material during charging and discharging. In addition, the molecular weight is relatively small, and the theoretical capacity of the positive electrode active material decreases little when Ti is added.

The coefficient e of X in compositional formula (1) is 0 or more and 0.05 or less. When X is added, the primary particle diameter can be suppressed as described above. On the other hand, when X is excessive, the proportion of other metals such as nickel is low, and there is a possibility that the discharge capacity may decrease. Furthermore, in the case of Ti or the like where X can be tetravalent, the proportion of divalent nickel increases relatively near the surface of the primary particles, making cation mixing more likely to occur. In contrast thereto, if e is within the above numerical range, a lithium composite oxide exhibiting high discharge capacity and favorable charging/discharging cycle characteristics is obtained. When e is 0.05 or less, the proportion of other metals such as nickel can be maintained sufficiently, thereby obtaining high discharge capacity. Furthermore, a layered structure with fewer defects can be formed to obtain high discharge capacity and favorable charging/discharging cycle characteristics.

$\alpha$ in compositional formula (1) is set to -0.20 or more and 0.20 or less. $\alpha$ represents the excess or deficiency of oxygen with respect to the stoichiometric ratio of Li(Ni, Co, M, $XO_2$. If $\alpha$ is within the above numerical range, the crystal structure has fewer defects, and the suitable crystal structure is capable of providing high discharge capacity and favorable charging/discharging cycle characteristics. It should be noted that the value of $\alpha$ can be measured by an inert gas melting-infrared absorption method.

The average composition of the particles of the positive electrode active material can be confirmed by high frequency inductively coupled plasma (ICP), atomic absorption spectrometry (AAS), or the like. The quantitative analysis of the concentration of each element of Ni, Co, M, and X can be performed by scanning transmission electron microscopy (STEM) and energy dispersive X-ray spectrometry (EDX).

(Primary particles and secondary particles)

The positive electrode active material has primary particles of the lithium composite oxide and secondary particles composed of the primary particles. At this time, the positive electrode active material includes secondary particles in which a plurality of primary particles aggregate, and the interior of the secondary particles is configured such that the plurality of primary particles are adjacent to each other via an interface. However, not all the primary particles form an interface with each other, but many primary particles form an interface with each other. The secondary particles (granules) of this positive electrode active material can be obtained by, for example, further granulating the primary particles produced by a method of producing a positive electrode active material, as described below, by dry granulation or wet granulation. Specific granulating means include, for example, granulators such as spray dryers and tumbling fluidized bed devices. Since the secondary particles made of the primary particles in this way have a small specific surface area, a positive electrode with sufficiently high molding density and filling rate of the positive electrode active material can be obtained, which is preferable.

The average value of the particle diameter of the primary particles (average primary particle diameter) is 50 nm or more and 550 nm or less. A smaller average primary particle diameter suppresses microcracks generated in the secondary particles and improves the charging/discharging cycle characteristics. The average primary particle diameter is preferably 450 nm or less, more preferably 400 nm or less. When the average primary particle diameter is 550 nm or less, microcracks generated in the secondary particles due to stress associated with charging/discharging cycles are suppressed, and a decrease in capacity is suppressed. Further, even though the diffusion resistance of Li ions in the primary particles increases with charging/discharging cycles, the diffusion distance is short, so a decrease in capacity tends to be suppressed. As a result, favorable charging/discharging cycle characteristics are obtained. On the other hand, when the average primary particle diameter is 50 nm or more, bonding between adjacent primary particles can be ensured, and breakage, deformation, falling of particles, etc. are less likely to occur when the positive electrode active material is applied to the positive electrode and pressure-molded or when the volume changes due to charging and discharging.

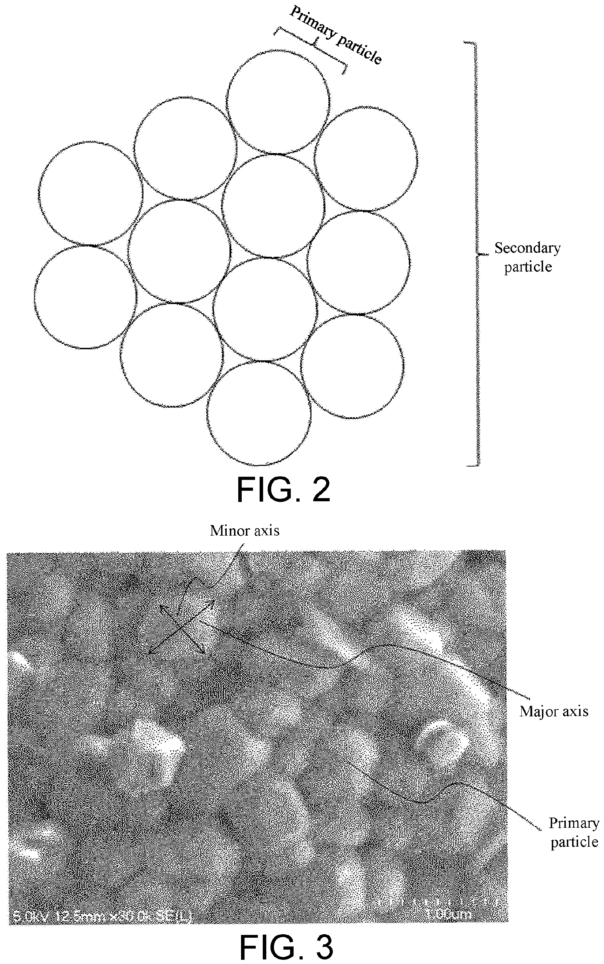

The above-described average primary particle diameter can be calculated by observing the surface of the positive electrode active material, that is, the surface of the secondary particles, using a scanning electron microscope (SEM). Specifically, as shown in FIG. 3, the maximum diameter (referred to as major axis) and the diameter in the direction perpendicular to the maximum diameter (referred to as minor axis) of the primary particle were measured from a SEM image, and the value obtained by adding up the major axis and the minor axis and dividing by 2 was defined as the primary particle diameter (primary particle diameter=(major axis+minor axis)/2). Then, the primary particle diameters of 50 arbitrary particles are measured, and the average value is calculated by calculating the arithmetic average of the particle diameters of the $6^{th}$ to $44^{th}$ particles in descending order of primary particle diameter.

On the other hand, the average value of the particle diameters of the secondary particles is preferably 3 μm or more and 50 μm or less, for example. The secondary particles have a form in which a plurality of primary particles are aggregated, and it is preferable that the average value of the particle diameters of the secondary particles is 3 μm or more, so as to increase the coating density when forming the positive electrode. Further, it is preferable that the average value is 50 μm or less, so as to obtain a positive electrode with a smooth surface after coating. The average secondary particle diameter can be evaluated using a laser diffraction particle size distribution measuring device.

(Crystallinity)

The positive electrode active material of the embodiment of the present invention has an R value greater than 0.420 and less than or equal to 0.460, which is calculated based on an intensity $I_{006}$ calculated from the height of a peak identified as a 006-plane of the $\alpha$-$NaFeO_2$ type layered structure in X-ray powder diffraction measurement, an intensity $I_{102}$ calculated from the height of a peak identified as a 102-plane, and an intensity $I_{101}$ calculated from the height of a peak identified as a 101-plane. It has been found that this R value depends on the amount of cation mixing in which nickel ions are mixed into lithium sites in the $\alpha$-$NaFeO_2$ type crystal structure. That is, as this R value decreases, the amount of cation mixing becomes small and the nickel ions mixed into the lithium sites are reduced, and Li ions can move smoothly within the lithium sites during charging and discharging. It has been found that the diffusion resistance decreases and the initial capacity increases as a result. Specifically, when the R value is 0.460 or less, cation mixing is small and high discharge capacity can be obtained. The R value is affected by the firing temperature, time, etc., as will be described later, and when the R value is 0.420 or less, firing tends to be excessive, and as a result, the average primary particle diameter becomes coarse and there is a possibility that favorable charging/discharging cycle characteristics may not be obtained. The upper limit of the R value is preferably 0.450 or less, more preferably 0.435 or less. In addition, the lower limit is preferably 0.425 or more, more preferably 0.430 or more.

The R value can be calculated by formula (2) by measuring the X-ray diffraction pattern using an X-ray analyzer with CuK$\alpha$ as the radiation source, and after removing K$\alpha$2, measuring the intensities $I_{006}$, $I_{102}$, and $I_{101}$ of the peaks from the peak height of each peak of the 006-plane near 2θ=36°, the 102-plane near 2θ=37°, and the 101-plane near 2θ=38°.

$$R\ value=(I_{006}+I_{102})/I_{101} \ \ldots\ (2)$$

There is also a means to calculate the R value not from the peak height of each peak but from the integrated intensity of each peak. It has been found that, in this embodiment, the correlation with the initial capacity is stronger when the R value is calculated from the peak height than from the integrated intensity, so in the present invention, the calculation method using peak height of formula (2) is adopted.

In addition, in the positive electrode active material of this embodiment, focusing on the half-value width of the peak identified as the 104-plane (hereinafter may be referred to as 104-plane half-value width) in X-ray powder diffraction measurement and the dependence on crystallite size and crystal lattice strain, it has been found that a narrow 104-plane half-value width indicates a tendency of a large crystallite size and small lattice strain. That is, it has been found that, as the crystallite size is large and the lattice strain is small, Li ions can move smoothly within the lithium sites during charging and discharging, so the diffusion resistance decreases, and as a result, the initial capacity tends to be high.

The initial capacity is influenced by the amount of cation mixing, crystallite size, and lattice strain. Therefore, it is desirable to consider both the R value, which indicates the correlation with the amount of cation mixing, and the 104-plane half-value width, which indicates the correlation with the crystallite size and lattice strain. In this embodiment, it has been found that the initial capacity tends to increase as the sum of the 104-plane half-value width and the R value (half-value width+R value) decreases. However, when the sum is too small, firing tends to be excessive and the average primary particle diameter becomes larger than necessary, so it has been found that there is an appropriate range. From this, it has been found that, when the sum of the 104-plane half-value width and the R value is 0.480 or more and 0.595 or less, high initial capacity is obtained, which is preferable. The upper limit of this half-value width+R value is preferably 0.585 or less, more preferably 0.560 or less. On the other hand, the lower limit is preferably 0.530 or more, more preferably 0.540 or more.

(Specific surface area)

In the positive electrode active material of the embodiment of the present invention, the specific surface area of the secondary particles is preferably 0.30 $m^2/g$ or more and 1.00 $m^2/g$ or less. As the specific surface area increases, the contact area between the electrolyte and the positive electrode active material widens, the insertion/desorption resistance of Li ions on the surface of the positive electrode active material decreases, and the initial capacity improves. Here, when the specific surface area is 0.30 $m^2/g$ or more, pores are formed in the secondary particles of the positive electrode active material. These pores can suppress stress caused by expansion/contraction of the volume of the positive electrode active material due to charging/discharging cycles. As a result, microcracks generated in the secondary particles are suppressed, and a decrease in capacity is suppressed. The specific surface area is more preferably 0.45 $m^2/g$ or more. The capacity improves and the capacity retention rate also increases. The specific surface area is more preferably 0.60 $m^2/g$ or more, and the specific surface area is particularly preferably 0.90 $m^2/g$ or more. The capacity further improves and the capacity retention rate also increases. If the specific surface area is 1.00 $m^2/g$ or less, bonding between adjacent primary particles can be ensured, and a decrease in capacity due to charging/discharging cycles is suppressed.

The specific surface area of the positive electrode active material can be determined by a Brunauer-Emett-Teller (BET) method or the like.

(Oil absorption amount)

Further, the oil absorption amount of N-methyl-2-pyrrolidone (hereinafter may be referred to as oil absorption amount) per 100 g of the lithium composite oxide powder based on JIS K5101-13-1 is preferably 27 ml/100g or more and 35 ml/100g or less. As the oil absorption amount increases, the contact area between the electrolyte and the positive electrode active material widens, the insertion/desorption resistance of Li ions on the surface of the positive electrode active material decreases, and the capacity improves. Here, when the oil absorption amount is 27 ml/100g or more, pores are formed in the secondary particles of the positive electrode active material. These pores can suppress stress caused by expansion/contraction of the volume of the positive electrode active material due to charging/discharging cycles. As a result, microcracks generated in the secondary particles are suppressed, and a decrease in capacity is suppressed. The oil absorption amount is more preferably 28 ml/100g or more. The capacity improves and the capacity retention rate also increases. The oil absorption amount is more preferably 29 ml/100g or more, and the oil absorption amount is particularly preferably 32 ml/100g or more. The capacity further improves and the capacity retention rate also increases. If the oil absorption amount is 35 ml/100g or less, bonding between adjacent primary particles can be ensured, and a decrease in capacity due to charging/discharging cycles is suppressed.

The oil absorption amount was measured in accordance with JIS K5101-13-1, and N-methylpyrrolidone (NMP) was used as the solvent. 5.0 g of the positive electrode active material is measured and placed in a mountain shape on a flat vat. NMP is sucked up with a poly dropper (2 mL capacity) to measure the mass. Next, while dropping NMP onto the positive electrode active material, the positive electrode active material is kneaded with a spatula, and the dropping and kneading are continued until the entire positive electrode active material becomes clay-like. When NMP becomes excessive, it can be visually observed that the droplets are not absorbed by the positive electrode active material and remain on the surface, and the oil absorption amount can be calculated by converting the amount of NMP that has been dropped up to this point per 100 g of the positive electrode active material.

(Porosity)

Further, in the positive electrode active material of the embodiment of the present invention, the porosity of the secondary particles is preferably 8% or more and 24% or less. When the porosity is 8% or more, stress caused by expansion/contraction of the volume of the positive electrode active material due to charging/discharging cycles can be suppressed. As a result, microcracks generated in the secondary particles are suppressed, and a decrease in capacity is suppressed. The porosity is more preferably 12% or more. The capacity improves and the capacity retention rate also increases. If the porosity is 24% or less, bonding between adjacent primary particles can be ensured, and a decrease in capacity due to charging/discharging cycles is suppressed.

The porosity can be measured by mercury porosimetry. Specifically, the porosity can be calculated by measuring the volume of pores with a pore diameter of 0.6 μm or less (pore volume) by mercury porosimetry and dividing the volume of the pores by the volume of the positive electrode active material (porosity=volume of pores with a pore diameter of 0.6 μm or less/volume of the positive electrode active material).

(Most frequent pore diameter)

Further, the most frequent pore diameter is preferably 0.22 μm or more and 0.30 μm or less. When the most frequent pore diameter is 0.22 μm or more, stress caused by expansion/contraction of the volume of the positive electrode active material due to charging/discharging cycles can be suppressed. As a result, microcracks generated in the secondary particles are suppressed, and a decrease in capacity is suppressed. The most frequent pore diameter is more preferably 0.26 μm or more. The capacity improves and the capacity retention rate also increases. If the most frequent pore diameter is 0.30 μm or less, bonding between adjacent primary particles can be ensured, and a decrease in capacity is suppressed.

The most frequent pore diameter can be measured by mercury porosimetry. Specifically, the pore distribution indicating the pore diameter and frequency was measured by mercury porosimetry, and the pore diameter with the highest frequency in the range where the pore diameter is 0.6 μm or less was defined as the most frequent pore diameter.

<Lithium ion secondary battery>

Next, a lithium ion secondary battery using the positive electrode active material (positive electrode active material for a lithium ion secondary battery) containing the lithium composite oxide as the positive electrode will be described.

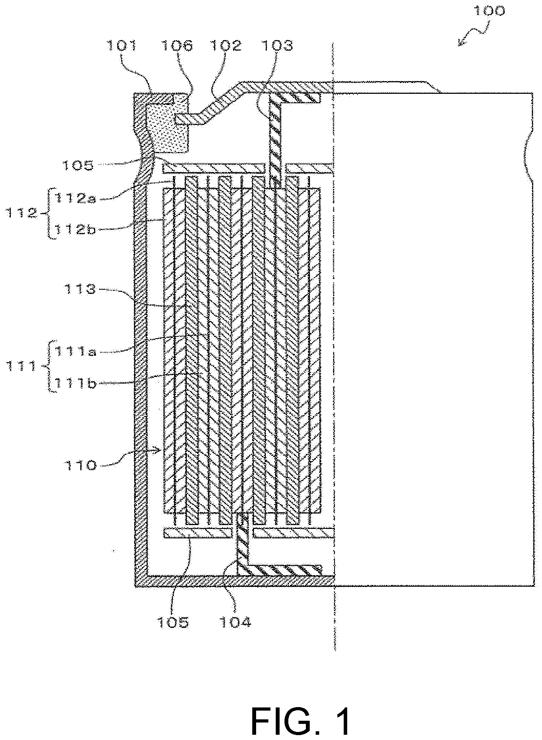

FIG. 1 is a partial cross-sectional view schematically showing an example of the lithium ion secondary battery. As shown in FIG. 1, the lithium ion secondary battery 100 includes a bottomed cylindrical battery can 101 housing a non-aqueous electrolyte, a wound electrode group 110 housed inside the battery can 101, and a disk-shaped battery lid 102 sealing an upper opening of the battery can 101. The battery can 101 and the battery lid 102 are made of a metal material such as stainless steel and aluminum, for example. A positive electrode 111 includes a positive electrode collector 111a and a positive electrode mixture layer 111b formed on the surface of the positive electrode collector 111a. Further, a negative electrode 112 includes a negative electrode collector 112a and a negative electrode mixture layer 112b formed on the surface of the negative electrode collector 112a. Although this lithium ion secondary battery 100 has a cylindrical shape, the shape and battery structure of the lithium ion secondary battery are not particularly limited. For example, the lithium ion secondary battery 100 may have an appropriate shape such as a rectangular shape, a button shape, or a laminated sheet shape, or have other battery structures.

The lithium ion secondary battery according to this embodiment can be used for various applications. The applications include, for example, small power supplies for portable electronic devices and household electrical devices, stationary power supplies for power storage devices, uninterruptible power supply devices, and power leveling devices, and drive power supplies for ships, railway vehicles, hybrid railway vehicles, hybrid automobiles, and electric vehicles, but are not limited thereto. Since the above-described lithium composite oxide has a high nickel content and exhibits not only high discharge capacity but also favorable charging/discharging cycle characteristics, the lithium composite oxide is particularly suitable for automotive applications that require a long life.

The chemical composition of the positive electrode active material used in the lithium ion secondary battery can be confirmed by disassembling the battery, collecting the positive electrode active material constituting the positive electrode, and performing high frequency inductively coupled plasma emission spectrometry, atomic absorption spectrometry, etc.

<Method for producing positive electrode active material>

The positive electrode active material of the present invention can be produced by, for example, reliably advancing the synthetic reaction between lithium, nickel, etc. under appropriate firing conditions at a raw material ratio such that the lithium composite oxide has a desired chemical composition. A method for producing the positive electrode active material will be described below as an example.

The method for producing the positive electrode active material for a lithium ion secondary battery includes a step of obtaining granules by either a granulation step or a coprecipitation step, and a firing step of firing the granules in an oxidizing atmosphere. It should be noted that steps other than these steps may be added. For example, a mixing step of mixing the granules with lithium carbonate or lithium hydroxide may be added. In addition, if a large amount of lithium hydroxide or lithium carbonate remains in the positive electrode active material obtained in the firing step, in a mixture coating step for producing the positive electrode, the slurry-like positive electrode mixture gels, so a water washing step and a drying step may be added following the firing step to reduce the remaining lithium hydroxide and lithium carbonate.

[Step of obtaining granules]

When obtaining the granules by the granulation step, a raw material mixing step is performed before the granulation step. A compound containing lithium and a compound containing metal elements other than Li may be mixed, or only a compound containing metal elements other than Li may be mixed. From the viewpoint of dispersing Li more uniformly, it is preferable to mix a compound containing lithium and a compound containing metal elements other than Li. For example, by weighing, pulverizing, and mixing these raw materials, a powdery mixture in which the raw materials are uniformly mixed can be obtained. A pulverizer for pulverizing the raw materials can be, for example, a general precision pulverizer such as a ball mill, a bead mill, a jet mill, a rod mill, and a sand mill. The raw material may be pulverized by dry pulverization or wet pulverization. A solvent such as water may be added after dry pulverization to form a slurry composed of the raw material and the solvent, or a solvent such as water may be added to the raw material in advance to form a slurry, followed by wet pulverization. From the viewpoint of obtaining uniform and fine powder, it is more preferable to perform wet pulverization using a medium such as water. Furthermore, it is preferable to uniformly disperse the raw material, and for example, in wet mixing, it is preferable to use a dispersant to improve the dispersibility of the raw material in the slurry. A polycarboxylic acid type, a urethane type, or an acrylic resin type can be used as the dispersant, and an acrylic resin type is preferable. The amount of the dispersant to be added can be arbitrarily determined in order to adjust the viscosity of the slurry.

In the granulation step, the mixture obtained in the raw material mixing step is granulated to obtain secondary particles (granules) in which the particles aggregate. The mixture may be granulated using either dry granulation or wet granulation. For granulating the mixture, an appropriate granulation method such as a rolling granulation method, a fluidized bed granulation method, a compression granulation method, or a spray granulation method can be used. As a granulation method for granulating the mixture, a spray granulation method is particularly preferable. Various types such as a two-fluid nozzle type, a four-fluid nozzle type, and a disk type can be used as a spray granulator. With the spray granulation method, the slurry that has been precisely mixed and pulverized by wet pulverization can be granulated while being dried. In addition, it is possible to precisely control the particle diameter of the secondary particles within a predetermined range by adjusting the slurry concentration, spray pressure, disk rotation speed, etc., thereby efficiently obtaining granules that are close to perfect spheres and have a uniform chemical composition. In the granulation step, it is preferable to granulate the mixture obtained in the mixing step so that the average particle diameter (D50) is 3 μm or more and 50 μm or less. In this embodiment, the average particle diameter (D50) of the secondary particles of the granules is more preferably 5 μm or more and 20 μm or less.

When obtaining the granules by the coprecipitation step, a coprecipitate may be obtained by adjusting the pH of an aqueous solution containing Ni, Co, M, and X. Ni, Co, M, and X may all be coprecipitated at once, or one or more of Ni, Co, M, and X may be coprecipitated (precipitated) and then the other elements may be precipitated (coprecipitated) simultaneously or each element may be precipitated (coprecipitated) separately on the surface of the coprecipitate.

When obtaining the granules by mixing only a compound containing metal elements other than Li in the granulation step and when obtaining the granules in the coprecipitation step, the granules and a lithium compound are mixed. The granules and the lithium compound can be mixed by dry mixing. For example, a V-type mixer, an attritor, etc. can be used as a mixer for mixing the granules and the lithium compound. Furthermore, the granules may be heated before being mixed with the lithium compound. The particle strength of the granules is increased, and the lithium compound can be mixed without breaking the granules.

Examples of the compound containing lithium include lithium carbonate, lithium acetate, lithium nitrate, lithium hydroxide, lithium chloride, and lithium sulfate. Also, it is preferable to use lithium carbonate or lithium hydroxide, and the gas generated in the firing step is water vapor or carbon dioxide gas, which causes little damage to manufacturing equipment and is excellent in industrial applicability and practicality. In particular, it is more preferable to use at least lithium carbonate, and it is more preferable to use lithium carbonate in a proportion of 80% by mass or more in the raw material containing lithium. Lithium carbonate has excellent supply stability and is inexpensive compared to other compounds containing lithium, and therefore can be easily obtained. Furthermore, lithium carbonate is weakly alkaline, and thus causes less damage to manufacturing equipment and is excellent in industrial applicability and practicality.

As the compound containing metal elements other than Li, it is preferable to use a compound composed of C, H, O, and N such as carbonate, hydroxide, oxyhydroxide, acetate, citrate, and oxide. From the viewpoint of ease of pulverization and amount of gas released by thermal decomposition, carbonate, hydroxide, and oxide are particularly preferable. Sulfate may also be used. Being easily soluble in a solvent such as water is preferable.

The atomic concentration ratio (molar ratio) between the atomic concentration (number of moles) of lithium contained in the fired precursor and the total atomic concentration (number of moles) of the metal elements other than lithium is desirable to react at a stoichiometric ratio of approximately 1:1. The atomic concentration ratio (molar ratio) between the atomic concentration (number of moles) of lithium contained in the fired precursor and the total atomic concentration (number of moles) of the metal elements other than lithium is 0.90 or more and 1.10 or less. During firing, the synthesis reaction proceeds appropriately and the amount of cation mixing in which nickel is mixed into lithium sites is reduced, which is preferably 1.02 or more and 1.10 or less, more preferably 1.04 or more and 1.10 or less. When the atomic concentration ratio (molar ratio) between the atomic concentration (number of moles) of lithium contained in the fired precursor and the total atomic concentration (number of moles) of the metal elements other than lithium increases, the amount of cation mixing decreases, the R value decreases, and the initial capacity increases. However, there is a possibility that lithium contained in the fired precursor may react with the firing container or evaporate during firing. Considering that some of the lithium may be lost due to reaction with the firing container or evaporation during firing, it is possible to add an excessive amount of lithium at the time of preparation.

[Firing step]

In the firing step, the granules are heat-treated to fire the lithium composite oxide. By adjusting the firing conditions, the desired R value and primary particle diameter can be obtained. The firing step may be performed in one stage of heat treatment in which the heat treatment temperature is controlled within a certain range, or may be performed in multiple stages of heat treatment in which the heat treatment temperature is controlled in different ranges. However, from the viewpoint of obtaining a lithium composite oxide with high crystal purity, high discharge capacity, and favorable charging/discharging cycle characteristics, it is preferable to include a first heat treatment step and a second heat treatment step shown below, and it is important to satisfy the conditions of the first heat treatment step and the second heat treatment step.

(First heat treatment step)

In the first heat treatment step, a first precursor is preferably obtained by heat treatment at a heat treatment temperature of 400°C or more and less than 750°C for 2 hours or more and 80 hours or less in an oxidizing atmosphere. The first heat treatment step may be performed in one stage of heat treatment in which the heat treatment temperature is controlled within a certain range, or may be performed in multiple stages of heat treatment in which the heat treatment temperature is controlled in different ranges. The main purpose of the first heat treatment step is to remove moisture or carbonic acid components and to generate crystal of the lithium composite oxide through a reaction between a lithium compound and a nickel compound. Nickel in the fired precursor is sufficiently oxidized to suppress cation mixing in which nickel is mixed into lithium sites and to suppress the formation of cubic domains due to nickel.

When the lithium compound is lithium carbonate, the first heat treatment step preferably obtains the first precursor by heat treatment at a heat treatment temperature of 600°C or more and less than 750°C for 2 hours or more and 80 hours or less. Further, in the first heat treatment step, it is preferable to perform a first stage of heat treatment in which the heat treatment temperature is controlled within a certain range, and a second stage of heat treatment in which the temperature is higher than the first stage of heat treatment in a range of 10°C or more and 50°C or less. By performing the two stages of heat treatment, nickel in the fired precursor is sufficiently oxidized, thereby suppressing cation mixing in which nickel is mixed into lithium sites.

When the lithium compound is lithium hydroxide, the first heat treatment step preferably obtains the first precursor by heat treatment at a heat treatment temperature of 400°C or more and less than 550°C for 2 hours or more and 20 hours or less. By setting the temperature less than 550°C, evaporation of lithium hydroxide can be suppressed, and the positive electrode active material with a desired composition is obtained. The heat treatment temperature is more preferably 510°C or less. When the temperature is 510°C or less, the amount of cation mixing can be suppressed while suppressing coarsening of the average primary particle diameter. In other words, it is possible to increase only the initial capacity without affecting the charging/discharging cycle characteristics.

(Second heat treatment step)

In the second heat treatment step, a lithium composite oxide is obtained by performing heat treatment on the first precursor obtained in the first heat treatment step at a heat treatment temperature of 700°C or more and 900°C or less, which is higher than the heat treatment temperature in the first heat treatment step, for 2 hours or more and 100 hours or less. The main purpose of the second heat treatment step is to grow the crystal grains of the lithium composite oxide having a layered structure to appropriate particle diameter and specific surface area.

In the second heat treatment step, if the heat treatment temperature is 700°C or more, the crystal grains of the lithium composite oxide can be grown to appropriate particle diameter and specific surface area while sufficiently oxidizing nickel and suppressing cation mixing. Moreover, if the heat treatment temperature is 900°C or less, lithium is difficult to volatilize and the layered structure is difficult to decompose, so a lithium composite oxide with high crystal purity, high discharge capacity, and favorable charging/discharging cycle characteristics can be obtained. Furthermore, a heat treatment step at a lower temperature than the second heat treatment step may be added after the second heat treatment step.

When the lithium compound is lithium carbonate, the heat treatment temperature in the second heat treatment step is preferably 820°C or less. By setting the heat treatment temperature in the second heat treatment step to 820°C or less, a lithium composite oxide having an average primary particle diameter of 550 nm or less is obtained, and favorable charging/discharging cycle characteristics are obtained. Furthermore, the specific surface area, oil absorption amount, porosity, and most frequent pore diameter can be controlled by changing the method of loading the first precursor into the firing container. By changing the loading method, the state of emission of carbon dioxide generated as the layered structure is formed can be changed to change the amount of liquid phase during the second heat treatment step, the oxygen concentration in the atmosphere, and the carbon dioxide concentration and to control the various physical properties described above.

On the other hand, when the lithium compound is lithium hydroxide, the heat treatment temperature in the second heat treatment step is preferably 850°C or less. By setting the heat treatment temperature in the second heat treatment step to 850°C or less, a lithium composite oxide having an average primary particle diameter of 550 nm or less is obtained, and favorable charging/discharging cycle characteristics are obtained. Further, the heat treatment time of the second heat treatment step is preferably 20 hours or more and 100 hours or less. By increasing the heat treatment time, it is possible to achieve appropriate amount of cation mixing and half-value width while suppressing the coarsening of the average primary particle diameter. By setting the heat treatment time of the second heat treatment step to 20 hours or more, a lithium composite oxide having a small average primary particle diameter, a small R value, and a small half-value width and achieving both high initial capacity and favorable charging/discharging cycle characteristics is obtained. Furthermore, from the viewpoint of mass productivity, the heat treatment time is preferably 100 hours or less.

In the firing step, an appropriate heat treatment device, for example, a rotary furnace such as a rotary kiln, a continuous furnace such as a roller hearth kiln, a tunnel furnace, or a pusher furnace, or a batch furnace can be used as the heat treatment means. The first heat treatment step and the second heat treatment step may be performed using the same heat treatment device, or may be performed using different heat treatment devices.

A positive electrode active material made of the lithium composite oxide can be produced through the above-described granulation step or coprecipitation step and firing step. The R value, the half-value width of the peak identified as the 104-plane (104-plane half-value width), and the average primary particle diameter can be controlled mainly through adjustment of the method of preparing the precursor before heat treatment, the composition ratio of metal elements such as nickel, the heat treatment temperature in the first heat treatment step, and the heat treatment temperature and heat treatment time in the second heat treatment step. Specifically, by increasing the atomic concentration ratio (molar ratio) between the atomic concentration (number of moles) of lithium in the precursor before heat treatment and the total atomic concentration (number of moles) of the metal elements other than lithium, the R value can be reduced while maintaining the average primary particle diameter. In addition, through the above operations of increasing the amount of cobalt and the amount of titanium, lowering the heat treatment temperature in the first heat treatment step, and lengthening the heat treatment time in the second heat treatment step, the R value can be reduced while maintaining the average primary particle diameter.

The synthesized lithium composite oxide may be supplied for a washing step of washing with deionized water or the like after the firing step for the purpose of removing impurities, and for a drying step of drying the washed lithium composite oxide. Besides, the synthesized lithium composite oxide may be subj ected to a crushing step of crushing the synthesized lithium composite oxide, a classification step of classifying the lithium composite oxide into a predetermined particle size, etc.

## Examples

The present invention will be specifically described hereinafter with reference to Examples. First, the measurement method will be described, and then Experimental Example 1 and Experimental Example 2 will be described in this order, but the technical scope of the present invention is not limited thereto.

### (Measurement of primary particle diameter)

The primary particle diameter of the positive electrode active material was measured using a scanning electron microscope "S-4700" (manufactured by Hitachi, Ltd.) according to the following procedure. A SEM image was captured at a magnification of 30,000 times, the major axis and minor axis of the primary particles (see FIG. 3) were measured, and the major axis and minor axis were added up and divided by 2 to calculate the primary particle diameter (primary particle diameter=(major axis+minor axis)/2). The primary particle diameters of 50 arbitrary particles were measured, and the average value was calculated by calculating the arithmetic average of the particle diameters of the $6^{th}$ to $44^{th}$ particles in descending order of primary particle diameter.

(Measurement of specific surface area)

The specific surface area of the positive electrode active material was determined by the BET method using a fully automatic specific surface area measuring device "Macsorb" (manufactured by Mountech Co., Ltd.).

(Measurement of oil absorption amount)

The oil absorption amount of the positive electrode active material was measured in accordance with JIS K5101-13-1, and NMP (N-methylpyrrolidone) was used as the solvent. 5.0 g of the positive electrode active material was measured and placed in a mountain shape on a flat vat. NMP was sucked up with a poly dropper (2 mL capacity) to measure the mass. Next, while dropping NMP onto the positive electrode active material, the positive electrode active material was kneaded with a spatula, and the dropping and kneading were continued until the entire positive electrode active material became clay-like. When NMP became excessive, it could be visually observed that the droplets were not absorbed by the positive electrode active material and remained on the surface, and the oil absorption amount could be calculated by converting the amount of NMP that has been dropped up to this point per 100 g of the positive electrode active material.

(Measurement of porosity and most frequent pore diameter)

The porosity of the positive electrode active material was determined by measuring the volume of pores with a pore diameter of 0.6 μm or less (pore volume) by mercury porosimetry using a pore distribution measuring device "AUTOPORE IV 9520 model" (manufactured by Shimadzu Corporation - Micromeritics), and dividing the volume of the pores by the volume of the positive electrode active material (porosity=volume of pores with a pore diameter of 0.6 μm or less/volume of the positive electrode active material. In addition, the pore distribution was measured using a pore distribution measuring device, and the pore diameter with the highest frequency in the range where the pore diameter was 0.6 μm or less was defined as the most frequent pore diameter.

(Measurement of R value)

The X-ray diffraction pattern in the X-ray powder diffraction measurement of the positive electrode active material was measured using an X-ray diffraction device "X'Pert PRO MPD" (manufactured by PANalyticalsei) under the conditions of a radiation source of CuKα, a tube voltage of 45 kV, a tube current of 40 mA, a sampling interval of 0.02°/step, a divergence slit of 0.5°, a scattering slit of 0.5°, a light receiving slit of 0.15 mm, and a scanning range of $15° \leqq 2\theta \leqq 80°$. Based on the obtained X-ray diffraction pattern, the intensities $I_{006}$, $I_{102}$, and $I_{101}$ of the peaks were measured from the peak height of each peak of the 006-plane near $2\theta=36°$, the 102-plane near $2\theta=37°$, and the 101-plane near $2\theta=38°$, after removing Kα2, using the analysis software "HighScorePlus" (manufactured by PANalyticalsei), and the R value was determined by R value=$(I_{006}+I_{102})/I_{101}$.

(Half-value width of peak identified as 104-plane)

The X-ray diffraction pattern in the X-ray powder diffraction measurement of the positive electrode active material was measured using an X-ray diffraction device "X'Pert PRO MPD" (manufactured by PANalyticalsei) under the conditions of a radiation source of CuKα, a tube voltage of 45 kV, a tube current of 40 mA, a sampling interval of 0.02°/step, a divergence slit of 0.5°, a scattering slit of 0.5°, a light receiving slit of 0.15 mm, and a scanning range of $15° \leqq 2\theta \leqq 80°$. Based on the obtained X-ray diffraction pattern, the half-value width of the peak of the 104-plane near $2\theta=44°$ was measured, after removing Kα2, using the analysis software "HighScorePlus" (manufactured by PANalyticalsei).

(Measurement of chemical composition of positive electrode active material)

The chemical composition of the synthesized positive electrode active material was analyzed by high frequency inductively coupled plasma emission spectrometry using an ICP-AES emission spectrometer "OPTIMA8300" (manufactured by Perkin Elmer). Further, the oxygen content (α in compositional formula (1)) of the positive electrode active material was analyzed by the inert gas melting-infrared absorption method.

<Experimental Example 1>

[Example 1]

First, lithium carbonate, nickel hydroxide, cobalt carbonate, manganese carbonate, titanium oxide, and aluminum oxide were prepared as raw materials, the raw materials were weighed so that the molar ratio of the metal elements Li:Ni:Co:Mn:Ti:Al became 1.03:0.85:0.03:0.08:0.03:0.01, and pure water was added so that the solid content ratio became 30% by mass. Then, a raw material slurry was prepared by wet pulverization (wet mixing) using a pulverizer so that the average particle diameter was less than 0.2 μm (raw material mixing step).

Subsequently, the obtained raw material slurry was spray-dried using a nozzle-type spray dryer (manufactured by Okawara Kakoki Co., Ltd., model ODL-20) to obtain granules having a D50 of 12 μm (granulation step). The spray pressure was 0.13 MPa, and the spray amount was 260 g/min. The dried granules were then heat-treated to fire the lithium composite oxide (firing step). Specifically, the granules were dehydrated in a continuous conveying furnace at 400°C for 5 hours in an air atmosphere. Next, in a firing furnace substituted with an oxygen gas atmosphere, the first heat treatment (first stage) was performed at 650°C for 22 hours in an oxygen stream, and then the first heat treatment (second stage) was performed at 700°C for 30 hours to obtain a first precursor (first heat treatment step). Thereafter, the first precursor was subjected to the second heat treatment (first stage) at 820°C for 10 hours in an oxygen stream in a firing furnace substituted with an oxygen gas atmosphere, and then the second heat treatment (second stage) at 740°C for 4 hours in an oxygen stream in a firing furnace substituted with an oxygen gas atmosphere to obtain a lithium composite oxide (second heat treatment step). The fired powder obtained by firing was classified using a sieve with an opening of 53 μm, and the powder under the sieve was used as the positive electrode active material of the sample. Hereinafter, the heat treatment in the first heat treatment step will be referred to as the first heat treatment, and the heat treatment in the second heat treatment step will be referred to as the second heat treatment.

[Example 2]

First, nickel hydroxide, manganese carbonate, titanium oxide, and aluminum oxide were prepared as raw materials, the raw materials were weighed so that the molar ratio of the metal elements Ni:Mn:Ti:Al became 0.88:0.08:0.03:0.01, and pure water was added so that the solid content ratio became 20% by mass. Then, a raw material slurry was prepared by wet pulverization (wet mixing) using a pulverizer so that the average particle diameter was less than 0.2 μm (raw material mixing step).

Subsequently, the obtained raw material slurry was spray-dried using a nozzle-type spray dryer (manufactured by Okawara Kakoki Co., Ltd., model ODL-20) to obtain granules having a D50 of 12 μm (granulation step). The spray pressure was 0.13 MPa, and the spray amount was 260 g/min. The dried granules were then heat-treated at 650°C for 10 hours to fire the metal composite oxide. Next, lithium hydroxide and the obtained metal composite oxide were weighed so that the molar ratio of Li:metal elements other than lithium became 1.03: 1.00, and mixed using a V-type mixer. Next, in a firing furnace substituted with an oxygen gas atmosphere, the first heat treatment was performed at 500°C for 14 hours in an oxygen stream to obtain a first precursor (first heat treatment step). Thereafter, the first precursor was subjected to the second heat treatment (first stage) at 850°C for 32 hours in an oxygen stream in a firing furnace substituted with an oxygen gas atmosphere, and then the second heat treatment (second stage) at 740°C for 4 hours in an oxygen stream in a firing furnace substituted with an oxygen gas atmosphere to obtain a lithium composite oxide (second heat treatment step). The fired powder obtained by firing was classified using a sieve with an opening of 53 μm, and the powder under the sieve was used as the positive electrode active material of the sample.

[Example 3]

A positive electrode active material was obtained in the same manner as in Example 2, except that the heat treatment temperature in the second heat treatment (first stage) was 835°C and the heat treatment time was 64 hours. It should be noted that the following second heat treatment refers to the first stage, and the description of (first stage) will be omitted.

[Example 4]

A positive electrode active material was obtained in the same manner as in Example 2, except that the heat treatment temperature in the second heat treatment was 835°C and the heat treatment time was 32 hours.

[Example 5]

A positive electrode active material was obtained in the same manner as in Example 2, except that the ratio of Li:metal elements other than lithium was 1.05: 1.00, the heat treatment temperature in the second heat treatment was 835°C, and the heat treatment time was 32 hours.

[Example 6]

A positive electrode active material was obtained in the same manner as in Example 1, except that the molar ratio of the metal elements Li:Ni:Co:Mn:Ti:Al was weighed to be 1.03:0.88:0.03:0.05:0.03:0.01.

[Example 7]

A positive electrode active material was obtained in the same manner as in Example 2, except that Nickel hydroxide, cobalt carbonate, manganese carbonate, titanium oxide, and aluminum oxide were prepared as raw materials, the raw materials were weighed so that the molar ratio of the metal elements Ni:Co:Mn:Ti:Al became 0.88:0.03:0.05:0.03:0.01, the heat treatment temperature in the second heat treatment was 820°C, and the heat treatment time was 24 hours.

[Example 8]

A positive electrode active material was obtained in the same manner as in Example 2, except that nickel hydroxide, cobalt carbonate, manganese carbonate, titanium oxide, and aluminum oxide were prepared as raw materials, the raw materials were weighed so that the molar ratio of the metal elements Ni:Co:Mn:Ti:Al became 0.88:0.03:0.05:0.03:0.01, the ratio of Li:metal elements other than lithium was 1.05: 1.00, the heat treatment temperature in the second heat treatment was 820°C, and the heat treatment time was 12 hours.

[Example 9]

A positive electrode active material was obtained in the same manner as in Example 2, except that nickel hydroxide, cobalt carbonate, and manganese carbonate were prepared as raw materials, the raw materials were weighed so that the molar ratio of the metal elements Ni:Co:Mn became 0.88:0.09:0.03, the heat treatment temperature in the second heat treatment was 740°C, and the heat treatment time was 32 hours.

[Example 10]

A positive electrode active material was obtained in the same manner as in Example 2, except that nickel hydroxide, cobalt carbonate, titanium oxide, and aluminum oxide were prepared as raw materials, the raw materials were weighed so that the molar ratio of the metal elements Ni:Co:Ti:Al became 0.92:0.03:0.03:0.02, the heat treatment temperature in the second heat treatment was 780°C, and the heat treatment time was 64 hours.

[Comparative Example 1]

A positive electrode active material was obtained in the same manner as in Example 1, except that the heat treatment temperature in the second heat treatment was 810°C.

[Comparative Example 2]

A positive electrode active material was obtained in the same manner as in Example 2, except that the ratio of Li:metal elements other than lithium was 1.05:1.00, the heat treatment temperature in the second heat treatment was 840°C, and the heat treatment time was 64 hours.

[Comparative Example 3]

A positive electrode active material was obtained in the same manner as in Example 2, except that the ratio of Li:metal elements other than lithium was 1.01:1.00, the heat treatment temperature in the second heat treatment was 835°C, and the heat treatment time was 32 hours.

[Comparative Example 4]

A positive electrode active material was obtained in the same manner as in Example 2, except that the heat treatment temperature in the first heat treatment was 520°C, the heat treatment temperature in the second heat treatment was 820°C, and the heat treatment time was 96 hours.

[Comparative Example 5]

A positive electrode active material was obtained in the same manner as in Example 2, except that the heat treatment temperature in the second heat treatment was 835°C and the heat treatment time was 10 hours.

[Comparative Example 6]

A positive electrode active material was obtained in the same manner as in Example 2, except that the heat treatment temperature in the first heat treatment was 520°C, the heat treatment temperature in the second heat treatment was 835°C, and the heat treatment time was 32 hours.

[Comparative Example 7]

A positive electrode active material was obtained in the same manner as in Example 6, except that the heat treatment temperature in the second heat treatment was 830°C.

[Comparative Example 8]

A positive electrode active material was obtained in the same manner as in Example 6, except that the heat treatment temperature in the second heat treatment was 840°C.

[Comparative Example 9]

A positive electrode active material was obtained in the same manner as in Example 8, except that the ratio of Li:metal elements other than lithium was 1.03: 1.00.

Table 1 shows the chemical compositions of the positive electrode active materials of Examples 1 to 10 and Comparative Examples 1 to 9, the first heat treatment temperatures, and the temperatures and times in the second heat treatment (first stage). It should be noted that the descriptions of the first heat treatment (first stage) and second heat treatment (second stage) in Example 1, Example 6, Comparative Example 1, Comparative Example 7, and Comparative Example 8 are omitted. In addition, the average primary particle diameter, R value, and half-value width of the peak identified as the 104-plane were evaluated. The results are also listed in Table 1. Although not stated, the average secondary particle diameter was in the range of 8 to 13 μm in both Examples and Comparative Examples, aiming at 10 μm. In the table, the half-value width of the peak identified as the 104-plane is described as "104-plane half-value width", and the sum of the half-value width of the peak identified as the 104-plane and the R value is described as "half-value width+R value". Further, a SEM image of Example 6 is shown in FIG. 3.

(Preparation of positive electrode)

A lithium ion secondary battery was prepared using the synthesized positive electrode active material as the positive electrode material, and the discharge capacity and capacity retention rate of the lithium ion secondary battery were determined. First, the prepared positive electrode active material, a carbon-based conductive material, and a binder pre-dissolved in N-methyl-2-pyrrolidone (NMP) were mixed at a mass ratio of 94:4.5:1.5. Then, the uniformly mixed positive electrode mixture slurry was applied onto a positive electrode collector made of aluminum foil with a thickness of 20 μm so that the coating amount was 10 mg/cm$^2$. Next, the positive electrode mixture slurry applied to the positive electrode collector was heat-treated at 120°C, and the solvent was distilled off to form a positive electrode mixture layer. Thereafter, the positive electrode mixture layer was pressure-molded using a hot press and punched into a circular shape with a diameter of 15 mm to obtain a positive electrode.

(Initial capacity)

Subsequently, a lithium ion secondary battery was prepared using the prepared positive electrode, a negative electrode, and a separator. Metal lithium punched into a circular shape with a diameter of 16 mm was used as the negative electrode. A porous separator made of polypropylene and having a thickness of 30 μm was used as the separator. The lithium ion secondary battery was assembled with the positive electrode and the negative electrode facing each other in a non-aqueous electrolyte with the separator therebetween. A solution was used as the non-aqueous electrolyte, which was obtained by dissolving $LiPF_6$ of 1.0 mol/L in a solvent in which ethylene carbonate and dimethyl carbonate were mixed at a volume ratio of 3:7.

The prepared lithium ion secondary battery was charged at constant current/constant voltage of 40 A/kg and an upper limit potential of 4.3 V based on the weight of the positive electrode mixture in an environment of 25°C. Then, the battery was discharged to a lower limit potential of 2.5 V at a constant current of 40 A/kg based on the weight of the positive electrode mixture to measure the initial capacity (discharge capacity). The results are also listed in Table 1.

(Initial capacity rate)

It is known that the initial capacity (discharge capacity) is influenced by the nickel ratio, and as the nickel ratio increases, the capacity increases. In order to compare the relationship between initial capacity and R value, it is necessary to remove the influence of nickel ratio. Therefore, the initial capacity (expected initial capacity) expected at each nickel ratio was calculated from the data on the initial capacity of Li(Ni, Co, Mn)Oz described in Non-patent Documents, Jaurnal of Materials Chemistry A, Issue 5, pp. 874-901 and Applied sciences, Issue 10, 8988, and the initial capacity rate was determined using formula (4). The results are also listed in Table 1. Since the initial capacity is also affected by the rate, only data measured at the rate of 0.02C to 0.5C was used to calculate the expected initial capacity. Further, since the positive electrode active material of the present invention contains additive elements, the capacity tended to be lower than the expected initial capacity.

$$\text{Initial capacity rate} = (\text{measured value of initial capacity})/(\text{expected initial capacity}) \times 100 \quad \ldots (4)$$

(Charging/discharging cycle characteristics (capacity retention rate))

A lithium ion secondary battery was prepared using the prepared positive electrode, a negative electrode, and a separator. As the negative electrode, a negative electrode prepared by applying graphite on a copper foil negative electrode collector was punched into a circular shape with a diameter of 16 mm. A porous separator made of polypropylene and having a thickness of 30 μm was used as the separator. The lithium ion secondary battery was assembled with the positive electrode and the negative electrode facing each other in a non-aqueous electrolyte with the separator therebetween. A solution was used as the non-aqueous electrolyte, which was obtained by dissolving $LiPF_6$ of 1.0 mol/L in a solvent in which ethylene carbonate and dimethyl carbonate were mixed at a volume ratio of 3:7, and then dissolving 1.5% by mass of vinylene carbonate.

The prepared lithium ion secondary battery was charged at constant current/constant voltage of 200 A/kg and an upper limit potential of 4.3 V based on the weight of the positive electrode mixture in an environment of 50°C. Then, a total of 10 cycles of discharging to a lower limit potential of 2.5 V at a constant current of 200 A/kg based on the weight of the positive electrode mixture were performed to measure the discharge capacity after 10 cycles. The ratio of the discharge capacity after 10 cycles to the initial capacity was calculated as the capacity retention rate. The results are also listed in Table 1.

[Table 1-1]

| | Chemical composition | Li source | Heat treatment temperature in first heat treatment (°C) | Heat treatment temperature in second heat treatment (°C) | Heat treatment time in second heat treatment (hour) |
|---|---|---|---|---|---|
| Example 1 | Li1.03Ni0.85Co0.03Mn0.08Ti0.03Al0.01O1.98 | $Li_2CO_3$ | 700 | 820 | 10 |
| Example 2 | Li1.03Ni0.88Mn0.08Ti0.03Al0.01O1.98 | LiOH | 500 | 850 | 32 |
| Example 3 | Li1.03Ni0.88Mn0.08Ti0.03Al0.01O1.98 | LiOH | 500 | 835 | 64 |
| Example 4 | Li1.03Ni0.88Mn0.08Ti0.03Al0.01O1.98 | LiOH | 500 | 835 | 32 |
| Example 5 | Li1.05Ni0.88Mn0.08Ti0.03A10.01O1.98 | LiOH | 500 | 835 | 32 |
| Example 6 | Li1.03Ni0.88Co0.03Mn0.05Ti0.03Al0.01O1.98 | $Li_2CO_3$ | 700 | 820 | 10 |
| Example 7 | Li1.03Ni0.88Co0.03Mn0.05Ti0.03Al0.01O1.98 | LiOH | 500 | 820 | 24 |
| Example 8 | Li1.05Ni0.88Co0.03Mn0.05Ti0.03A10.01O1.98 | LiOH | 500 | 820 | 12 |
| Example 9 | Li1.03Ni0.88Co0.09Mn0.03O1.99 | LiOH | 500 | 740 | 32 |
| Example 10 | Li1.03Ni0.92Co0.03Ti0.03A10.02O1.98 | LiOH | 500 | 780 | 64 |
| Comparative Example 1 | Li1.03Ni0.85Co0.03Mn0.08Ti0.03A10.01O1.98 | $Li_2CO_3$ | 700 | 810 | 10 |
| Comparative Example 2 | Li1.05Ni0.88Mn0.08Ti0.03Al0.01O1.98 | LiOH | 500 | 840 | 64 |
| Comparative Example 3 | Li1.01Ni0.88Mn0.08Ti0.03Al0.01O1.98 | LiOH | 500 | 835 | 32 |
| Comparative Example 4 | Li1.03Ni0.88Mn0.08Ti0.03Al0.01O1.98 | LiOH | 520 | 820 | 96 |
| Comparative Example 5 | Li1.03Ni0.88Mn0.08Ti0.03Al0.01O1.98 | LiOH | 500 | 835 | 10 |
| Comparative Example 6 | Li1.03Ni0.88Mn0.08Ti0.03A10.01O1.98 | LiOH | 520 | 835 | 32 |
| Comparative Example 7 | Li1.03Ni0.88Co0.03Mn0.O5Ti0.03Al0.01O1.98 | $Li_2CO_3$ | 700 | 830 | 10 |
| Comparative Example 8 | Li1.03Ni0.88Co0.03Mn0.O5Ti0.03Al0.01O1.98 | $Li_2CO_3$ | 700 | 840 | 10 |

(continued)

| | Chemical composition | Li source | Heat treatment temperature in first heat treatment (°C) | Heat treatment temperature in second heat treatment (°C) | Heat treatment time in second heat treatment (hour) |
|---|---|---|---|---|---|
| Comparative Example 9 | $Li_{1.03}Ni_{0.88}Co_{0.03}Mn_{0.05}Ti_{0.03}Al_{0.01}O_{1.98}$ | LiOH | 500 | 820 | 12 |

[Table 1-2]

| | Average value of primary particle diameter (nm) | R value | 104-plane half-value width (°) | Half-value width+R value | Initial capacity (Ah/kg) | Initial capacity rate (%) | Capacity retention rate (%) |
|---|---|---|---|---|---|---|---|
| Example 1 | 368 | 0.448 | 0.135 | 0.583 | 190 | 94 | 89 |
| Example 2 | 540 | 0.458 | 0.135 | 0.592 | 191 | 93 | 84 |
| Example 3 | 511 | 0.445 | 0.130 | 0.575 | 194 | 95 | 86 |
| Example 4 | 483 | 0.453 | 0.134 | 0.587 | 191 | 93 | 89 |
| Example 5 | 479 | 0.434 | 0.112 | 0.546 | 195 | 95 | 90 |
| Example 6 | 491 | 0.437 | 0.144 | 0.581 | 194 | 95 | 88 |
| Example 7 | 503 | 0.437 | 0.103 | 0.540 | 194 | 95 | 81 |
| Example 8 | 469 | 0.423 | 0.096 | 0.519 | 197 | 96 | 83 |
| Example 9 | 334 | 0.427 | 0.146 | 0.573 | 192 | 94 | 91 |
| Example 10 | 313 | 0.425 | 0.111 | 0.536 | 211 | 101 | 86 |
| Comparative Example 1 | 253 | 0.475 | 0.151 | 0.626 | 182 | 90 | 90 |
| Comparative Example 2 | 579 | 0.440 | 0.140 | 0.579 | 190 | 93 | 80 |
| Comparative Example 3 | 451 | 0.467 | 0.131 | 0.598 | 189 | 92 | 88 |
| Comparative Example 4 | 419 | 0.463 | 0.134 | 0.597 | 186 | 91 | 87 |
| Comparative Example 5 | 481 | 0.464 | 0.142 | 0.606 | 185 | 90 | 84 |
| Comparative Example 6 | 534 | 0.467 | 0.143 | 0.610 | 185 | 90 | 81 |
| Comparative Example 7 | 599 | 0.434 | 0.131 | 0.565 | 195 | 95 | 53 |
| Comparative Example 8 | 618 | 0.443 | 0.135 | 0.578 | 194 | 95 | 48 |
| Comparative Example 9 | 428 | 0.469 | 0.127 | 0.596 | 178 | 87 | 99 |

From Example 4, Example 5, and Comparative Example 3, it was confirmed that as the ratio of Li:metal elements other than lithium increased, the R value decreased and the 104-plane half-value width became narrower while the average primary particle diameter was maintained within the range of the present invention. Then, when the ratio of Li:metal elements other than lithium was 1.01, the R value was 0.467, which was outside the range of the present invention; in contrast, when the ratio of Li:metal elements other than lithium was 1.03 or more, the R value was 0.453 or less, and an R value within the range of the present invention was obtained.

In addition, from Example 3, Example 4, and Comparative Example 5, it was confirmed that as the heat treatment time in the second heat treatment increased, the R value decreased and the 104-plane half-value width became narrower while the average primary particle diameter was maintained within the range of the present invention. Then, when the heat treatment time in the second heat treatment was 10 hours, the R value was 0.464, which was outside the range of the present invention; in contrast, when the heat treatment time in the second heat treatment was 32 hours or more, the R value was 0.453 or less, and an R value within the range of the present invention was obtained.

Furthermore, from Example 4 and Comparative Example 6, it was confirmed that when the heat treatment temperature in the first heat treatment was low, the R value decreased and the 104-plane half-value width became narrower while the average primary particle diameter was maintained within the range of the present invention. Then, when the heat treatment temperature in the first heat treatment was 520°C, the R value was 0.467, which was outside the range of the present invention; in contrast, when the heat treatment temperature in the first heat treatment was 500°C, the R value was 0.453 or less, and an R value within the range of the present invention was obtained.

From the above, it was confirmed that the R value and the average primary particle diameter could be simultaneously controlled within the range of the present invention by adjusting the ratio of Li and metal elements other than lithium, the heat treatment temperature in the first heat treatment step, and the heat treatment temperature and heat treatment time in the second heat treatment step.

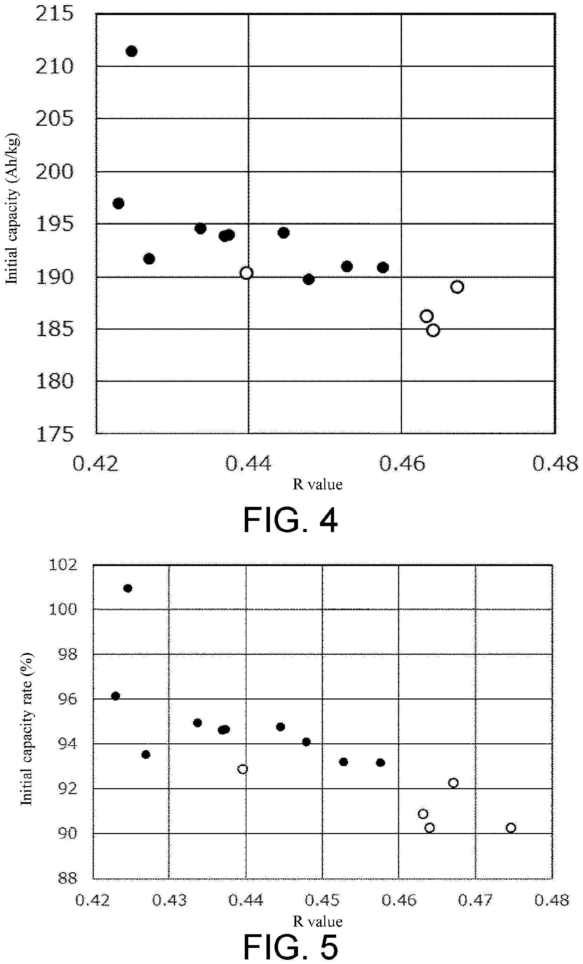

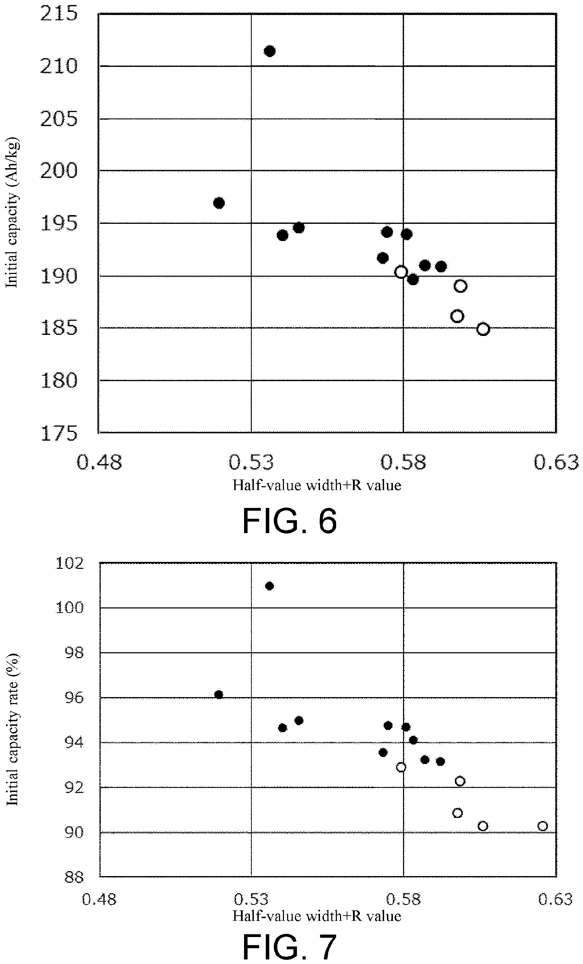

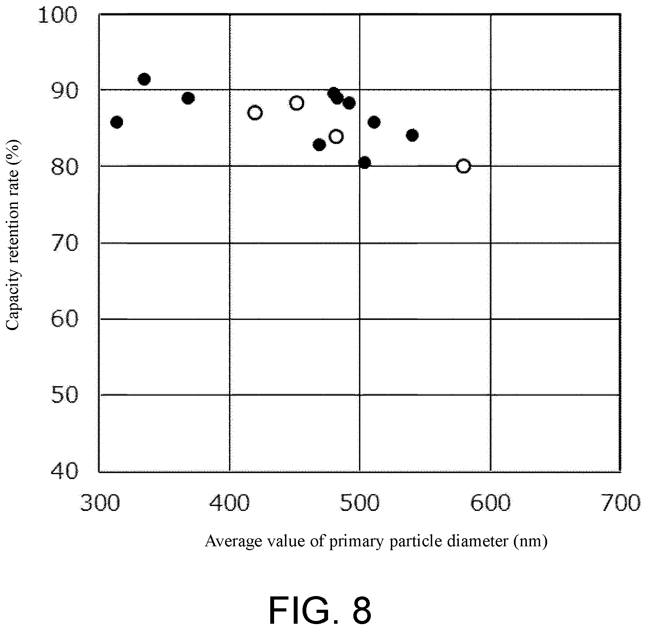

Next, the relationship between the initial capacity and the R value is shown in FIG. 4, the relationship between the initial capacity rate and the R value is shown in FIG. 5, the relationship between the initial capacity and the sum of the 104-plane half-value width and the R value (described as "half-value width+R value") is shown in FIG. 6, and the relationship between the initial capacity rate and the sum of the 104-plane half-value width and the R value is shown in FIG. 7. Further, the relationship between the capacity retention rate and the average primary particle diameter (described as "average value of primary particle diameter") is shown in FIG. 8. It should be noted that the black circles indicate examples and the white circles indicate comparative examples.

From FIG. 4 and FIG. 5, it was confirmed that the initial capacity and the initial capacity rate depended on the R value, and when the R value was greater than 0.420 and less than or equal to 0.46, a high initial capacity of 190 Ah/kg or more and a high initial capacity rate of 93% or more were obtained. From FIG. 6 and FIG. 7, it was confirmed that the initial capacity and the initial capacity rate depended on the 104-plane half-value width+R value, and when the sum of the 104-plane half-value width and the R value was 0.480 or more and 0.595 or less, a high initial capacity of 190 Ah/kg or more and a high initial capacity rate of 93% or more were obtained. Moreover, from FIG. 8, it was confirmed that the capacity retention rate depended on the average primary particle diameter, and when the average primary particle diameter was 550 nm or less, favorable charging/discharging cycle characteristics of 81% or more were obtained.

As shown in Table 1, in Examples 1 to 10, the primary particle diameter was 50 nm or more and 550 nm or less, and the R value was greater than 0.420 and less than or equal to 0.460. As a result, each example of the present invention had high initial capacity exceeding 190 Ah/kg and a high initial capacity rate exceeding 93%. In addition, it was confirmed that favorable charging/discharging cycle characteristics were achieved with the capacity retention rate also exceeding 81%, and the positive electrode active material was excellent in both high initial capacity and favorable charging/discharging cycle characteristics. In other words, it was confirmed that high initial capacity and favorable charging/discharging cycle characteristics could both be achieved by simultaneously controlling the R value and the average primary particle diameter through adjustment of the ratio of Li to metal elements other than lithium, the heat treatment temperature in the first heat treatment step, and the heat treatment temperature and heat treatment time in the second heat treatment step.

<Experimental Example 2>

[Examples 11 to 15]

A positive electrode active material was obtained in the same manner as in Example 1, except for the method of loading the first precursor in the second heat treatment. The loading method changes the loading weight, the stacking thickness, and the size of the loading container. By changing these loading methods, it is possible to change the state of emission of carbon dioxide, the amount of liquid phase, and the oxygen concentration and carbon dioxide concentration in the atmosphere in the first precursor. As a result, it is considered to control various physical properties such as specific surface area, oil absorption amount, porosity, most frequent pore diameter, etc. described below. However, the loading methods and control of various physical properties are not determined uniquely, and it is necessary to accumulate and correlate data for each site.

[Example 16]

A positive electrode active material was obtained in the same manner as in Example 13, except that the heat treatment temperature in the second heat treatment was 815°C.

The chemical compositions of the positive electrode active materials of Examples 11 to 16, temperature in the second heat treatment (first stage), average primary particle diameter, R value, half-value width of the peak identified as the 104-plane, specific surface area, oil absorption amount, porosity, and most frequent pore diameter were evaluated. The results are shown in Table 2. It should be noted that Table 2 also shows the results of Example 1. Further, although not stated, the average secondary particle diameter was in the range of 8 to 13 μm, aiming at 10 μm. In addition, a positive electrode was prepared in the same manner as in Experimental Example 1, and the initial capacity, initial capacity rate, and capacity retention rate were evaluated. The results are also listed in Table 2.

[Table 2-1]

| | Chemical composition | Li source | Heat treatment temperature in first heat treatment (°C) | Heat treatment temperature in second heat treatment (°C) | Heat treatment time in second heat treatment (hour) | Average value of primary particle diameter (nm) | R value | 104-plane half-value width (°) | Half-value width+ R value |
|---|---|---|---|---|---|---|---|---|---|
| Example 1 | Li1.03Ni0.85Co0.03Mn0.08Ti0.03A10.01O1.98 | Li2CO3 | 700 | 820 | 10 | 368 | 0.448 | 0.135 | 0.583 |
| Example 11 | | | 700 | 820 | 10 | 427 | 0.457 | 0.101 | 0.558 |
| Example 12 | | | 700 | 820 | 10 | 378 | 0.444 | 0.123 | 0.567 |
| Example 13 | | | 700 | 820 | 10 | 424 | 0.447 | 0.112 | 0.559 |
| Example 14 | | | 700 | 820 | 10 | 350 | 0.438 | 0.109 | 0.547 |
| Example 15 | | | 700 | 820 | 10 | 308 | 0.439 | 0.111 | 0.549 |
| Example 16 | | | 700 | 815 | 10 | 430 | 0.452 | 0.114 | 0.566 |

[Table 2-2]

| | Specific surface area ($m^2/g$) | Oil absorption amount (ml/ 100g) | Porosity (%) | Most frequent pore diameter ($\mu m$) | Initial capacity (Ah/kg) | Initial capacity rate (%) | Capacity retention rate (%) |
|---|---|---|---|---|---|---|---|
| Example 1 | 0.28 | 26 | 4 | 0.21 | 190 | 94 | 89 |
| Example 11 | 0.41 | 27 | 9 | 0.23 | 198 | 98 | 90 |
| Example 12 | 0.48 | 28 | 9 | 0.23 | 194 | 96 | 91 |
| Example 13 | 0.51 | 28 | 12 | 0.23 | 197 | 98 | 91 |
| Example 14 | 0.81 | 30 | 19 | 0.26 | 197 | 98 | 92 |
| Example 15 | 1.18 | 38 | 26 | 0.31 | 201 | 100 | 88 |
| Example 16 | 0.90 | 34 | 23 | 0.28 | 205 | 102 | 92 |

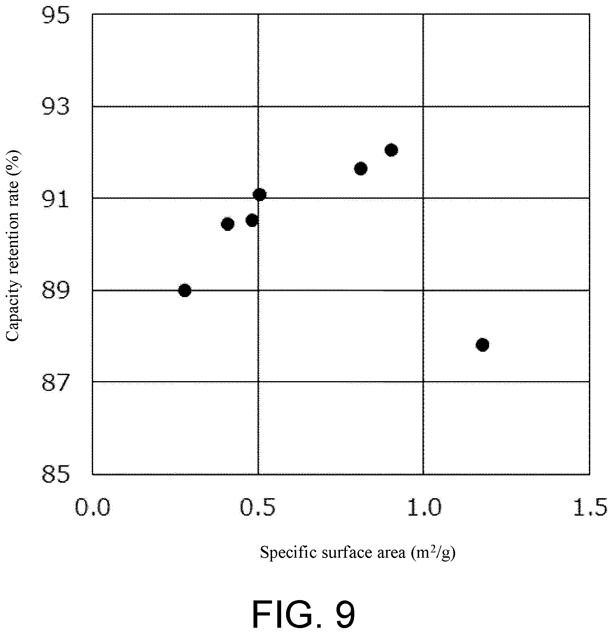

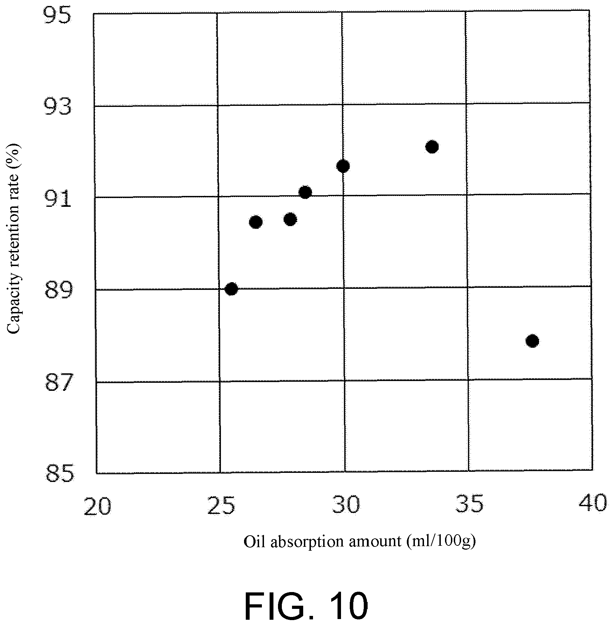

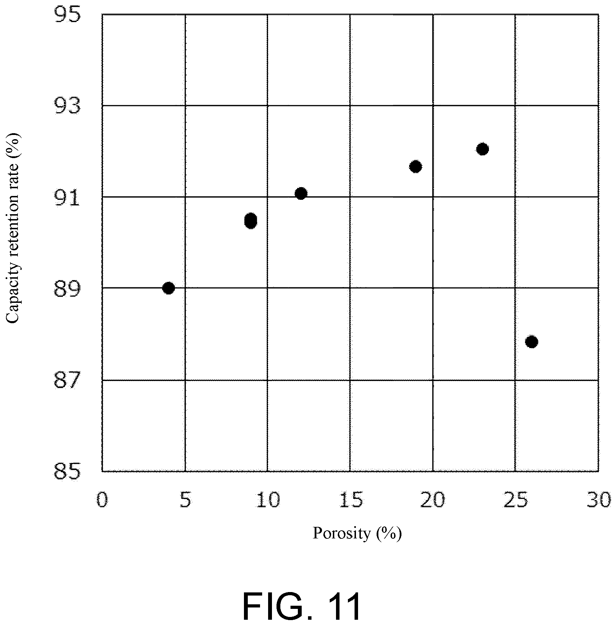

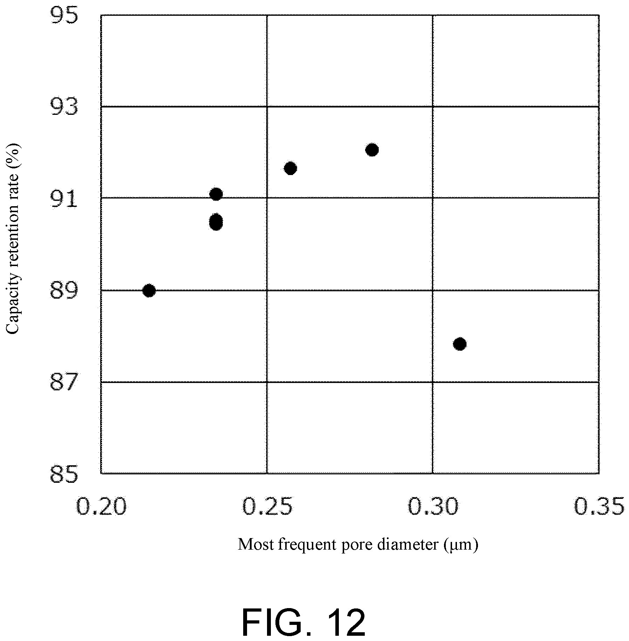

Next, the relationship between the capacity retention rate and the specific surface area is shown in FIG. 9, the relationship between the capacity retention rate and the oil absorption amount is shown in FIG. 10, the relationship between the capacity retention rate and the porosity is shown in FIG. 11, and the relationship between the capacity retention rate and the most frequent pore diameter is shown in FIG. 12.

From Table 2, it was confirmed that Examples 11 to 16 had high initial capacity exceeding 190 Ah/kg. It was also confirmed that the initial capacity was higher than in Example 1. In particular, Examples 15 and 16 had higher initial capacity of 200 Ah/kg or more. Although Example 1 and Example 15 exhibited a good capacity retention rate for the primary particle diameter was relatively small among Examples 1 to 16, the capacity retention rate was low among the examples in Table 2 that had the same chemical composition and similar primary particle diameters. The reason is considered to be that in Example 1, the porosity was as low as 4%, so the effect of improving the capacity retention rate was not sufficiently obtained. On the other hand, in Example 15, the porosity was too high at 26%, so the particle strength of the secondary particles decreased, which is considered to have influenced the decrease in capacity retention rate.

Further, from FIG. 9, it was confirmed that when the specific surface area was 0.30 $m^2/g$ or more and 1.00 $m^2/g$ or less, favorable charging/discharging cycle characteristics with a capacity retention rate of 90% or more were obtained.

From FIG. 10, it was confirmed that when the oil absorption amount was 27 ml/100g or more and 35 ml/100g or less, favorable charging/discharging cycle characteristics with a capacity retention rate of 90% or more were obtained.

From FIG. 11, it was confirmed that when the porosity was 8% or more and 24% or less, favorable charging/discharging cycle characteristics with a capacity retention rate of 90% or more were obtained.

From FIG. 12, it was confirmed that when the most frequent pore diameter was 0.22 $\mu m$ or more and 0.30 $\mu m$ or less, favorable charging/discharging cycle characteristics with a capacity retention rate of 90% or more were obtained.

From the above, it was confirmed that in the range where the specific surface area is 0.30 $m^2/g$ or more and 1.00 $m^2/g$ or less, the oil absorption amount is 27 ml/100g or more and 35 ml/100g or less, the porosity is 8% or more and 24% or less, and the most frequent pore diameter is 0.22 $\mu m$ or more and 0.30 $\mu m$ or less, higher initial capacity and better charging/discharging cycle characteristics can both be achieved.

<Experimental Example 3>

The Ni ratio was set to 90%.

[Example 17]

A positive electrode active material was obtained in the same manner as in Example 1, except that lithium carbonate, nickel hydroxide, cobalt carbonate, manganese carbonate, titanium oxide, and aluminum oxide were prepared as raw materials, the raw materials were weighed so that the molar ratio of the metal elements Li:Ni:Co:Mn:Ti:Al became 1.03:0.90:0.03:0.02:0.03:0.02, the heat treatment temperature in the second heat treatment was 800°C, and the heat treatment time was 90 hours.

[Example 18]

A positive electrode active material was obtained in the same manner as in Example 17, except that the heat treatment temperature in the second heat treatment was 795°C.

The chemical compositions of the positive electrode active materials of Examples 17 and 18, the temperature in the second heat treatment (first stage), the average primary particle diameter, the R value, the half-value width of the peak identified as the 104-plane, the specific surface area, and the oil absorption amount were evaluated. The results are shown in Table 3. Further, although not stated, the average secondary particle diameter was in the range of 8 to 13 μm, aiming at 10 μm. In addition, a positive electrode was prepared in the same manner as in Experimental Example 1, and the initial capacity, the initial capacity rate, and the capacity retention rate were evaluated. The results are also listed in Table 3.

[Table 3-1]

| | Chemical composition | Li source | Heat treatment temperature in first heat treatment (°C) | Heat treatment temperature in second heat treatment (°C) | Average value of primary particle diameter (nm) | R value | 104-plane half-value width (°) | Half-value width+R value |
|---|---|---|---|---|---|---|---|---|
| Example 17 | $Li_{1.03}Ni_{0.90}Co_{0.03}Mn_{0.02}Ti_{0.03}Al_{0.02}O_{1.98}$ | $Li_2CO_3$ | 700 | 800 | 342 | 0.456 | 0.126 | 0.583 |
| Example 18 | | | 700 | 795 | 330 | 0.451 | 0.126 | 0.576 |

[Table 3-2]

| | Specific surface area ($m^2/g$) | Oil absorption amount (ml/100g) | Initial capacity (Ah/kg) | Initial capacity rate (%) | Capacity retention rate (%) |
|---|---|---|---|---|---|
| Example 17 | 0.52 | 28 | 202 | 98 | 85 |
| Example 18 | 0.74 | 30 | 207 | 100 | 88 |

From Table 3, Examples 17 and 18 had a primary particle diameter of 50 nm or more and 550 nm or less, and an R value greater than 0.420 and less than or equal to 0.460, which were within the range of the present invention, and further, the sum of the half-value width of the peak identified as the 104-plane and the R value was 0.480 or more and 0.595 or less, the specific surface area was 0.30 $m^2/g$ or more and 1.00 $m^2/g$ or less, and the oil absorption amount was within the range of 27 ml/100g or more and 35 ml/100g or less. As a result, it was confirmed that in Examples 17 and 18, high initial capacity of 202 Ah/kg or more was obtained, and the initial capacity rate was also as high as 98%. Furthermore, it was confirmed that favorable charging/discharging cycle characteristics with a capacity retention rate of 85% or more were obtained. When respectively comparing Examples 17 and 12 and Examples 18 and 14 in which the oil absorption amounts were similar (since there was a positive correlation between oil absorption amount and porosity, the porosities were also similar), the initial capacity of Examples 17 and 18 was 5 to 10 Ah/kg higher than Examples 12 and 14, and the capacity retention rate was lower by 4 to 6%. The former had a Ni ratio of 90%, while the latter had a Ni ratio of 85%, and thus it is considered that this difference resulted in higher capacity but a slightly lower capacity retention rate. Although there were some differences due to the Ni ratio, it was confirmed that both high initial capacity and favorable charging/discharging cycle characteristics can be achieved within the range of the present invention.

Reference Signs List

100 lithium ion secondary battery
101 battery can
102 battery lid
103 positive electrode lead piece
104 negative electrode lead piece
105 insulating plate
106 sealing material
110 wound electrode group
111 positive electrode
111a positive electrode collector
111b positive electrode mixture layer
112 negative electrode
112a negative electrode collector
112b negative electrode mixture layer
113 separator

## Claims

**1.** A positive electrode active material for a lithium ion secondary battery, comprising:

primary particles of a lithium composite oxide represented by following formula (1) and secondary particles in which the primary particles aggregate,

$$Li_{1+a}Ni_bCo_cM_dX_eO_{2+\alpha} \cdots \quad (1)$$

[where, in compositional formula (1), M is at least one element selected from Al and Mn, X is at least one element selected from the group consisting of Ti, Ga, Mg, Zr, and Zn, and a, b, c, d, and e are numbers satisfying $-0.10 \leqq a \leqq 0.10$, $0.80 \leqq b < 1.00$, $0 \leqq c \leqq 0.20$, $0 \leqq d \leqq 0.20$, $0 \leqq e \leqq 0.05$, $b+c+d+e=1.00$, and $-0.20 \leqq \alpha \leqq 0.20$]
wherein an average value of particle diameters of the primary particles evaluated with a scanning electron microscope is 50 nm or more and 550 nm or less, and
an R value calculated by following formula (2) is greater than 0.420 and less than or equal to 0.460,

$$\text{R value} = (I_{006} + I_{102}) / I_{101} \quad \ldots (2)$$

based on an intensity $I_{006}$ calculated from a height of a peak identified as a 006-plane of an $\alpha$-$NaFeO_2$ type layered structure in X-ray powder diffraction measurement, an intensity $I_{102}$ calculated from a height of a peak identified as a 102-plane, and an intensity $I_{101}$ calculated from a height of a peak identified as a 101-plane.

**2.** The positive electrode active material for a lithium ion secondary battery according to claim 1, wherein a sum of a half-value width of a peak identified as a 104-plane and the R value in X-ray powder diffraction measurement is 0.480 or more and 0.595 or less.

**3.** The positive electrode active material for a lithium ion secondary battery according to claim 1 or 2, wherein a specific surface area is 0.30 $m^2/g$ or more and 1.00 $m^2/g$ or less.

**4.** The positive electrode active material for a lithium ion secondary battery according to claim 1 or 2, wherein an oil absorption amount of N-methyl-2-pyrrolidone per 100 g of lithium composite oxide powder based on JIS K5101-13-1 is 27 ml/100g or more and 35 ml/100g or less.

**5.** The positive electrode active material for a lithium ion secondary battery according to claim 1 or 2, wherein a porosity measured by mercury porosimetry is 8% or more and 24% or less.

**6.** The positive electrode active material for a lithium ion secondary battery according to claim 1 or 2, wherein a most frequent pore diameter is 0.22 $\mu$m or more and 0.30 $\mu$m or less.

**7.** The positive electrode active material for a lithium ion secondary battery according to claim 1 or 2, wherein a in the formula (1) satisfies $0.02 \leqq a \leqq 0.10$.

**8.** A lithium ion secondary battery, comprising a positive electrode containing the positive electrode active material for a lithium ion secondary battery according to claim 1 or 2.

100
101
106
102
103
105
112
112a
112b
113
111
111a
111b
110
105
104

FIG. 1

Primary particle
Secondary particle

FIG. 2

Minor axis
Major axis
Primary particle
5.0kV 12.5mm x30.0k SE(L)
1.00um

FIG. 3

Initial capacity (Ah/kg)
215
210
205
200
195
190
185
180
175
0.42
0.44
0.46
0.48
R value

FIG. 4

Initial capacity rate (%)
102
100
98
96
94
92
90
88
0.42
0.43
0.44
0.45
0.46
0.47
0.48
R value

FIG. 5

215
210
205
200
195
190
185
180
175
Initial capacity (Ah/kg)
0.48
0.53
0.58
0.63
Half-value width+R value

FIG. 6

102
100
98
96
94
92
90
88
Initial capacity rate (%)
0.48
0.53
0.58
0.63
Half-value width+R value

FIG. 7

100
90
80
70
60
50
40
Capacity retention rate (%)
300
400
500
600
700
Average value of primary particle diameter (nm)


FIG. 8

95
93
91
89
87
85
0.0
0.5
1.0
1.5
Capacity retention rate (%)
Specific surface area (m2/g)

FIG. 9

95
93
91
89
87
85
20
25
30
35
40
Capacity retention rate (%)
Oil absorption amount (ml/100g)

FIG. 10

95
93
91
89
87
85
0
5
10
15
20
25
30
Capacity retention rate (%)
Porosity (%)

FIG. 11

95
93
91
89
87
85
0.20
0.25
0.30
0.35
Capacity retention rate (%)
Most frequent pore diameter (μm)

FIG. 12

**INTERNATIONAL SEARCH REPORT**

International application No. **PCT/JP2022/033802**

**A. CLASSIFICATION OF SUBJECT MATTER**

***H01M 4/525***(2010.01)i; ***C01G 53/00***(2006.01)i; ***H01M 4/505***(2010.01)i
FI: H01M4/525; H01M4/505; C01G53/00 A

According to International Patent Classification (IPC) or to both national classification and IPC

**B. FIELDS SEARCHED**

Minimum documentation searched (classification system followed by classification symbols)

H01M4/525; C01G53/00; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/061633 A1 (SUMITOMO METAL MINING CO., LTD.) 13 April 2017 (2017-04-13) | 1-8 |
| A | JP 2002-042817 A (DENSO CORP) 08 February 2002 (2002-02-08) | 1-8 |
| A | CN 111435743 A (SVOLT ENERGY TECHNOLOGY COMPANY LIMITED) 21 July 2020 (2020-07-21) | 1-8 |
| A | KR 10-1826612 B1 (L & F CO., LTD.) 07 February 2018 (2018-02-07) | 1-8 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/033802**

| Patent document cited in search report | Publication date (day/month/year) | Patent family member(s) | Publication date (day/month/year) |
|---|---|---|---|
| WO 2017/061633 A1 | 13 April 2017 | US 2018/0309124 A1 | |
| | | CN 108137347 A | |
| JP 2002-042817 A | 08 February 2002 | US 2003/0027046 A1 | |
| | | FR 2824668 A | |
| CN 111435743 A | 21 July 2020 | WO 2021/121168 A1 | |
| | | KR 10-2021-0134660 A | |
| KR 10-1826612 B1 | 07 February 2018 | US 2020/0203717 A1 | |
| | | WO 2018/225912 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000072446 A
- JP 2002124257 A
- JP 2015182665 A


### Non-patent literature cited in the description


- *Jaurnal of Materials Chemistry A,* (5), 874-901
- *Applied sciences,* (10), 8988